# EUROPEAN PATENT SPECIFICATION

(11) **EP 3 347 414 B1**
(45) Date of publication and mention of the grant of the patent: **19.06.2019**
(21) Application number: 16757672.7
(22) Date of filing: 29.08.2016
(51) Int. Cl.: C08L 67/02, C08L 81/06

(54) **POLYMER BLENDS OF POLY(PHENYL SULFONE) AND POLYESTER POLYMERS AND MOBILE ELECTRONIC DEVICE COMPONENTS MADE THEREFROM**
POLYMERMISCHUNGEN AUS POLY(PHENYLSULFON)- UND POLYESTERPOLYMEREN UND DARAUS HERGESTELLTE MOBILE ELEKTRONISCHE VORRICHTUNGSKOMPONENTEN
MÉLANGES POLYMÈRES DE POLY(PHÉNYL SULFONE) ET POLYMÈRES DE POLYESTER ET COMPOSANTS DE DISPOSITIF ÉLECTRONIQUE MOBILE FABRIQUÉS À PARTIR DE CEUX-CI

(30) Priority: 09.09.2015 US 201562216095 P; 23.11.2015 EP 15195865
(43) Date of publication of application: 18.07.2018
(73) Proprietor: Solvay Specialty Polymers USA, LLC., Alpharetta, GA 30005-3914 (US)
(72) Inventor: EL-HIBRI, Mohammad Jamal, Atlanta, Georgia 30350 (US); GAUTAM, Keshav, Duluth, Georgia 30097 (US)
(74) Representative: Fiorucci, Hélène
(86) International application number: PCT/EP2016/070319
(87) International publication number: WO 2017/042041

(56) References cited:
- US-A1- 2013 150 507

## Description

### FIELD OF THE INVENTION

The invention relates to blends of polyester and poly(phenyl sulfone) having increased impact resistance and excellent stain resistance, whiteness and chemical resistance.

### BACKGROUND OF THE INVENTION

Nowadays, mobile electronic devices such as mobile phones, personal digital assistants (PDAs), laptop computers, tablet computers, smart watches, portable audio players, and so on, are in widespread use around the world. Mobile electronic devices are getting smaller and lighter for even more portability and convenience, while at the same time becoming increasingly capable of performing more advanced functions and services, both due to the development of the devices and network systems.

While in the past, low density metals such as magnesium or aluminum, were the materials of choice for mobile electronic parts, synthetic resins have progressively come as at least partial replacement, for costs reasons (some of these less dense metals such as magnesium are somewhat expensive, and manufacturing the often small and/or intricate parts needed is expensive), for overriding design flexibility limitations, for further weight reduction, and for providing un-restricted aesthetic possibilities, thanks to the colorability of the same. It is therefore desirable that plastic mobile electronic parts are made from materials that are easy to process into various and complex shapes, are able to withstand the rigors of frequent use, including outstanding impact resistance, generally possess electrical insulating capabilities, and which meet challenging aesthetic demands while not interfering with their intended operability. Nevertheless, in certain cases, plastics may not have the strength and/or stiffness to provide for all-plastic structural parts in mobile electronic devices, and metal/synthetic resins assemblies are often encountered.

US 2013/150507 discloses a composition comprising 80-99 wt.-% polyphenylene ether sulfone (PPSU), 1-20 wt.-% aryl polyester carbonate. The composition does not comprise a reactive impact modifier.

Providing polymeric compositions having desirable mechanical performance for ensuring structural support (*e.g*., tensile strength) and yet desirable flexibility for enabling mounting/assembling (*e.g.,* elongation at break), able to withstand impact and aggressive chemicals (*e.g.,* impact and chemical resistance, respectively), and having good colorability is a continuous challenge in this field, and while solutions based on a variety of plastics have already been attempted, still continuous improvements to reach unmet challenges are required.

### DETAILED DESCRIPTION OF THE INVENTION

Described herein are polymer blends of poly(phenyl sulfone) polymers and polyester polymers having improved impact performance and excellent chemical resistance. Additionally, the blends also have desirable whiteness, colorablility and anodization resistance. The polymer blends include at least one semi-aromatic polyester polymer, at least one poly(phenyl sulfone) ("PPSU") polymer, and at least one impact modifier. In some embodiments, the polymer blends can optionally include one or more aromatic polycarbonate polymers, one or more poly(aryl ether sulfone) ("PAES") polymers or one or more additives. Furthermore, it has been found that the addition of a polycarbonate polymer to the polymer blend can synergistically improve the impact performance of the polymer blend. In some embodiments, the polymer blends can be desirably incorporated into mobile electronic device components. For clarity, the polymer blends are sometimes referred to as "PPSU/PE" blends.

The PPSU/PE blends can have improved impact performance. While it is often desirable that mobile electronic devices (and parts thereof) be small and lightweight, excellent structural strength is highly desirable so that the devices will not be damaged in normal handling and occasional sudden impact (*e.g.* drops). Correspondingly, structural parts are generally built into mobile electronic devices that impart strength, rigidity, and/or impact resistance to the device, and possibly also provide mounting places for various internal components of the device and/or part or all of the mobile electronic device case *(e.g.,* outer housing), while ensuring electrical insulation/electrical shield among components. In some embodiments, the PPSU/PE blends can have an impact resistance of at least 300 Joules/meter ("J/m"), at least about 350 J/m, or at least about 400 J/m. In some embodiments, the PPSU/PE blends described herein can have an impact resistance of no more than about 1000 J/m, no more than about 800 J/m, no more than about 700 J/m, or no more than about 650 J/m. A person of ordinary skill in the art will recognize additional impact resistance ranges within the explicitly disclosed ranges are contemplated and within the scope of the present disclosure. Impact resistance can be measured using a notched Izod impact test according the ASTM D256 standard, as described further in the Examples.

The PPSU/PE blends can also have outstanding chemical resistance. In some application settings, at least a portion of a plastic component of a mobile electronic device can be exposed to the environment external to the mobile electronic device and, therefore, can come into contact with chemical agents in the external environment. For example, tablet computers, mobile phones and wearable computing devices are designed to interact with humans through physical contact and exposed plastic components thereof can be exposed to chemical agents from interacting body parts. As another example, mobile electronic devices can be susceptible to accidental spills including, but not limited to, liquids. In general, the agents in the external environment that come into contact with the exposed portion of a plastic device component include, but are not limited to, polar organic agents such as consumer chemical agents.

The resistance of a device component to polar organic chemicals can be measured by its resistance to sunscreen lotion, which generally represents one of the harshest consumer chemical a device component is expected to endure in its intended application setting. In particular, sunscreen lotion generally contains a spectrum of ultraviolet absorbing chemicals that can be highly corrosive to plastic. A representative sunscreen can include at least 1.8 wt.% avobenzone (1-(4-methoxyphenyl)-3-(4-tert-butylphenyl)-1,3-propanedione), at least 7 wt.% homosalate (3,3,5-trimethylcyclohexyl salicylate) and at least 5 wt.% octocrylene (2-ethylhexyl 2-cyano-3,3-diphenylacrylate). An example of the aforementioned sunscreen is commercially available under the trade name Banana Boat® Sport Performance® (SPF 30) from Edgewell (St. Louis, MO). The chemical resistance of a PPSU/PE blend can be measured as the lowest strain necessary to visually observe cracking or crazing in a molded sample of the PPSU/blend after the sample is exposed to aggressive chemicals and aged in a controlled environment ("critical strain"). In general, the higher the critical strain, the higher the chemical resistance of the PPSU/PE polymer blend. The PPSU/PE blends of interest herein can have a critical strain of greater than about 2%. The measurement of critical strain is described further in the Examples below.

The PPSU/PE blends can also have desirable whiteness. In some embodiments, the PPSU/PE blends can have a CIE L* value of from about 85 to about 96, a CIE a* value from about -2 to about 2 and a CIE b* value from about -2 and about 6. A person of ordinary skill in the art will recognize additional L*, a* and b* ranges within the explicitly disclosed ranges are contemplated and within the scope of the present disclosure.

The PPSU/PE blends can also have desirable anodization resistance. Metal parts (*e.g.* aluminum parts) or metal-plastic composite parts (*e.g.*, aluminum-plastic parts) present in mobile electronic devices generally undergo anodization treatment. Anodization treatment can include electro chemical processes where the aim is to build an oxide layer on the metal surface, generally through the use of aggressive chemicals. Correspondingly, polymeric materials exhibiting excellent anodization resistance are desirable in application settings in which anodization is performed on mobile electronic parts already containing or assembled to polymeric elements. Anodization resistance can be measured as the difference in tensile strength and elongation at break of an as molded sample of the PPSU/PE blend and a molded sample that has been exposed to 70 wt.% sulfuric acid at 23° C. The measurement of the anodization resistance is further described in the Examples. In some embodiments, the PPSU/PE blends can have a relative difference in tensile strength (100*|tensile strength exposed - tensile strength unexposed|/(tensile strength exposed)) of no more than about 10%, no more than about 5%, no more than about 2%, no more than about 1.5%, or no more than about 1. In some embodiments, the PPSU/PE blends can have a relative difference in tensile elongation at break of no more than about 30%, no more than about 20%, no more than about 15%, or no more than about 12%. A person of ordinary skill in the art will recognize additional ranges of relative tensile strength and tensile elongation at break within the explicitly disclosed ranges are contemplated and within the scope of the present disclosure.

### The Semi-Aromatic Polyester

The PPSU/PE blends of interest herein include at least one semi-aromatic polyester. As used herein, a "semi-aromatic polyester" refers to a polymer including at least 50 mol% recurring unit (Rₚₑ) having at least one ester group (-C(O)O-), at least one alkylene group and at least one arylene group, where the arylene group contains at least 2 fused benzenic rings having at least two carbons in common. The semi-aromatic polyester can be a homopolymer or copolymer (random, alternating or block). In some embodiments, the semi-aromatic polyester has at least 60 mol%, at least 70 mol%, at least 80 mol%, at least 90 mol%, at least 95 mol%, or at least 99 mol% recurring unit (Rₚₑ). A person of ordinary skill in the art will recognize additional recurring unit (Rₚₑ) concentration ranges within the explicitly disclosed ranges are contemplated and within the scope of the present disclosure.

In some embodiments, recurring unit (Rₚₑ) can be represented by one of the following formulae: 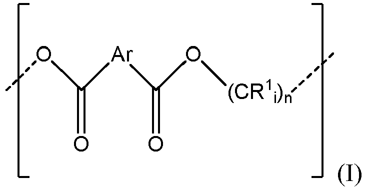 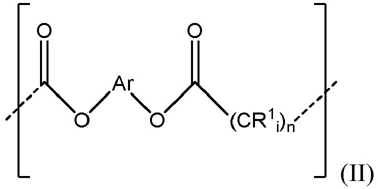 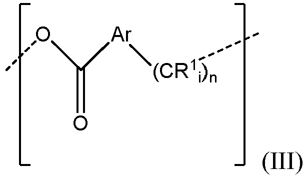 where Ar is an arylene group containing at least 2 fused benzenic rings having at least two carbons in common; where R¹, at each instance, is independently selected from the group consisting of a halogen, an alky, an alkenyl, an aryl, a aryl, an ether, a thioether, an ester, an amide, an imide, an alkali or alkaline earth metal sulfonate, an alkyl sulfonate, an alkali or alkaline earth metal phosphonate, an alkyl phosphonate, an amine, an quaternary ammonium, and any combination thereof; where n is an integer from 1 to 20; and where i, at each instance, is an independently selected integer ranging from 0 to 2. As used herein, "independently selected" means that the corresponding units can be the same or different and are selected independently of each other.

In some embodiments, -(CR¹ᵢ)ₙ- can be represented by the formula -CₙH₂ₙ- (i=0 at each instance). In some such embodiments, the -CₙH₂ₙ-can be a C₂-C₈ alkylene group, a linear C₂-C₈ alkylene group, or a linear C₂ - C₄ alkylene group. Desirable -CₙH₂ₙ- groups can include, but are not limited to, a methyl group; an ethyl group; an n-propyl group; an isopropyl group; or a butyl group (n-, iso, sec or tert).

In some embodiments, Ar can be selected from a naphthylene (*e.g.,* 2,6-naphthylene), an anthrylene (*e.g.,* 2,6-anthrylene), a phenanthrylenes (*e.g*., 2,7-phenanthrylene), a naphthacenylene and a pyrenylene. Particularly desirable semi-aromatic polyesters have recurring unit (Rₚₑ) that is represented by Formula (I), where Ar is a napthalate represented by the following formula, 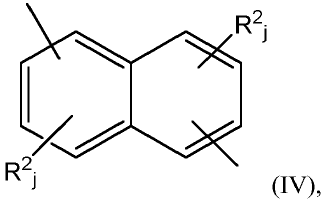 where R², at each instance, is independently selected from the group consisting of a halogen, an alkyl, a perhalogenated alkyl, an alkenyl, a perhalogenated alkynyl, an aryl, a perhalogenated aryl, an ether, a thioether, an ester, an amide, an imide, an alkali or alkaline earth metal sulfonate, an alkyl sulfonate, an alkali or alkaline earth metal phosphonate, an alkyl phosphonate, an amine, an quaternary ammonium, and any combination thereof; and where j, at each instance, is an independently selected integer from 0 to 3. In some embodiments, Ar can be represented by the following formula:

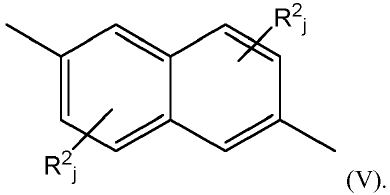

Examples of desirable units Ar include, but are not limited to, 2,6-napthalate; 2,7-napthalate; 1,4-napthalate; 2,3-napthalate; 1,8-napthalate; 1,2-napthalate; and derivatives thereof.

Desirable recurring units (Rₚₑ) can include alkylene napthalates including, but not limited to, methylene napthalate, ethylene napthalate, propylene napthalate and butylene napthalate. In such embodiments, the polyester can be a poly(methylene-2,6-napthalate), a poly(ethylene-2,6-napthalate), a poly(propylene-2,6-napthatlate) or a poly(butylene-2,6-napthalate), respectively. Excellent results were obtained for poly(ethylene-2,6-npathalate) ("PEN").

The semi-aromatic polyesters of interest herein can be synthesized using techniques well known in the art. For example, the semi-aromatic polyesters of Formula (IV) can by formed from by polycondensation of the corresponding dicarboxylic acid of Ar: 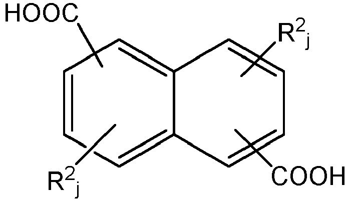 and the corresponding diol of -(CR¹ᵢ)ₙ-: HO-(CR¹ᵢ)ₙ-OH.

In addition to recurring unit (Rₚₑ), the semi-aromatic polyester can include one or more additional recurring units (Rₚₑ*) distinct from recurring units (Rₚₑ). Desirable recurring unit (Rₚₑ*) includes, but is not limited to, those described above with respect to recurring unit (Rₚₑ). In some such embodiments, the semi-aromatic polyester can include no more than about 49 mol%, no more than about 40 mol%, no more than about 30 mol%, no more than about 20 mol%, no more than about 10 mol%, no more than about 5 mol%, or no more than about 1 mol% of the one or more additional recurring unit (Rₚₑ*). A person of ordinary skill in the art will recognized additional recurring unit (Rₚₑ*) concentration ranges within the explicitly disclosed ranges are contemplated and within the scope of the present disclosure.

The semi-aromatic polyester can have a number average molecular weight of at least about 1,000 g/mol, at least about 5,000 g/mol, or at least about 10,0000 g/mol. In some embodiments, the semi-aromatic polyester can have a number average molecular weight of no more than about 100,000 g/mol, no more than about 75,000 g/mol, or no more than about 50,000 g/mol. In some embodiments, the semi-aromatic polyester can have a weight average molecular weight of at least about 1,000 g/mol, at least about 15,000 g/mol or at least about 20,000 g/mol. In some embodiments, the semi-aromatic polyester can have a weight average molecular weight of no more than about 200,000 g/mol, no more than about 150,000 g/mol, no more than about 125,000 g/mol, no more than about 110,000 g/mol or no more than about 100,000 g/mol. A person of ordinary skill in the art will recognize additional ranges for number average and weight average molecular weights within the explicitly disclosed ranges are contemplated and within the scope of the present disclosure.

For the PPSU/PE blends of interest herein, the concentration of the semi-aromatic polyester can be from about 1 wt.% to about 80 wt.%, from about 2 wt.% to about 70 wt.%, from about 5 wt.% to about 40 wt.%, from about 7 wt.% to about 35 wt%, from about 10 wt.% to about 35 wt.%, from about 12 wt.% to about 35 wt.%, from about 13 wt.% to about 35 wt.% from about 15 wt.% to about 35 wt.%, from about 15 wt.% to about 30 wt.%, from about 15 wt.% to about 27 wt.% or from about 15 wt.% to about 25 wt.%, relative to the total weight of the PPSU/PE blend. A person of ordinary skill in the art will recognize additional semi-aromatic polyester concentration ranges within the explicitly disclosed ranges are contemplated and within the scope of the present disclosure.

In some embodiments, the PPSU/PE blend can include additional, distinct semi-aromatic polyesters. The additional, distinct semi-aromatic polyesters can include those semi-aromatic polyesters described above. In such embodiments, the weight ratio of the semi-aromatic polyester to the combined weight of the semi-aromatic polyester and the additional, distinct semi-aromatic polyesters (weight semi-aromatic polyester/(weight semi-aromatic polyester + combined weight of additional, distinct semi-aromatic polyesters)) is at least about 0.5, at least about 0.6, at least about 0.7, at least about 0.8, at least about 0.9, at least about 0.95, or at least about 0.99. In some embodiments, the weight ratio of the semi-aromatic polyester to the combined weight of the semi-aromatic polyester and the additional, distinct semi-aromatic polyesters can be 1. A person of ordinary skill in the art will recognize additionally weight ratio ranges within the explicitly disclosed ranges are contemplated and within the scope of the present disclosure.

### The Polyphenylsulfone Polymer

The PPSU/PE blends of interest herein include at least one PPSU polymer. A PPSU polymer refers to any polymer in which at least 50 mol% of the recurring units are recurring units (Rₚₚₛᵤ) of the following formula: 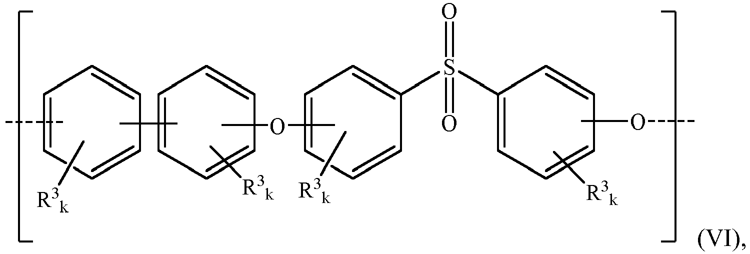 where R³, at each instance, is independently selected from the group consisting of a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine and a quaternary ammonium; and where k, at each instance, is an independently selected integer from 0 to 4. In some embodiment, the PPSU polymer can have at least about 60 mole percent ("mol%"), at least about 70 mol%, at least about 80 mol%, at least about 90 mol%, at least about 95 mol%, or at least about 99 mol% of the recurring units (Rₚₚₛᵤ). A person of ordinary skill in the art will recognize additional recurring unit (Rₚₚₛₛ) concentration ranges within the explicitly disclosed ranges are contemplated and within the scope of the present disclosure.

In some embodiments, recurring unit (Rₚₚₛᵤ) can be represented by the following formula:

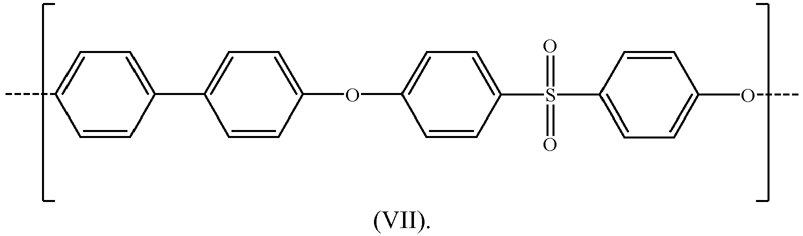

The blends of interest herein can have a PPSU concentration of no more than about 90 wt.%, at least about 20 wt.%, from about 20 wt.% to about 90 wt.%, from about 30 wt.% to about 85 wt.%, from about 40 wt.% to about 80 wt.%, from about 50 wt.% to about 70 wt.% or from about 55 wt.% to about 65 wt.%, relative to the total weight of the blend. A person of ordinary skill in the art will recognize additional PPSU concentration ranges within the explicitly disclosed ranges are contemplated and within the scope of the present disclosure. PPSU can be synthesized by methods well known in the art. Additionally, desirable PPSU polymers are available from Solvay Specialty Polymers USA, L.L.C. (Alpharetta, GA) under the trade name Radel® PPSU.

In some embodiments, the weight ratio of the PPSU polymer to the polyester polymer (weight PPSU/weight polyester) can be at least about 1, at least about 1.5, at least about 2, or at least about 3. In some embodiments, the weight ratio of the PPSU polymer to the polyester polymer can be no more than about 15, no more than about 10 or no more than about 7. A person of ordinary skill in the art will recognize additional weight ratio ranges within the explicitly disclosed ranges are contemplated and within the scope of the present disclosure.

It has been surprisingly found that the melt flow rate of the PPSU polymer can have a significant effect on the on the impact performance of the PPSU/PE blends described herein. In particular, it has been found that when the melt flow rate of the PPSU is no more than about 25 grams/10 minutes ("g/10 min.") or no more than about 20 g/10 min., the PPSU/PE blends have significantly increased impact performance. In some embodiments, the PPSU polymer can have a melt flow rate of no more than about 25 g/10 min., no more than about 20 g/10 min.. In some embodiments, the PPSU polymer can have a melt flow rate of at least about 1 g/10 min., at least about 5 g/10 min., at least about 10 g/10 min., at least about 15 g/10 min., or at least about 18 g/10 min. Melt flow rate can be measured according to the ASTM D-1238 standard at a temperature of 365° C and a weight of 5 kg. A person of ordinary skill in the art will recognized additional melt flow rate ranges within the explicitly disclosed ranges are contemplated and within the scope of the present disclosure.

The PPSU polymer can have a weight average molecular weight from about 20,000 g/mol to about 100,000 g/mol or from about 40,000 g/mol to about 80,000 g/mol. The weight average molecular weight can be determined by gel permeation chromatography using the ASTM D5296 standard with polystyrene standards. A person of ordinary skill in the art will recognizes additional weight average molecular weight ranges within the explicitly disclosed ranges are contemplated and within the scope of the present disclosure.

In addition to recurring units (Rₚₚₛᵤ), the PPSU polymer can include one or more additional recurring units (Rₚₚₛᵤ*) distinct from recurring unit (Rₚₚₛᵤ). Desirable additional recurring units (Rₚₚₛᵤ*) include, but are not limited to, those described above with respect to recurring unit (Rₚₚₛᵤ). In some embodiments, at least one of the one or more additional recurring units (Rₚₚₛᵤ*) can be the result of the polycondensation of bisphenol A with bisphenol S (4,4'-dihydroxydiphenyl ether). In such embodiments, recurring unit (Rₚₚₛᵤ*) can be represented by the formula

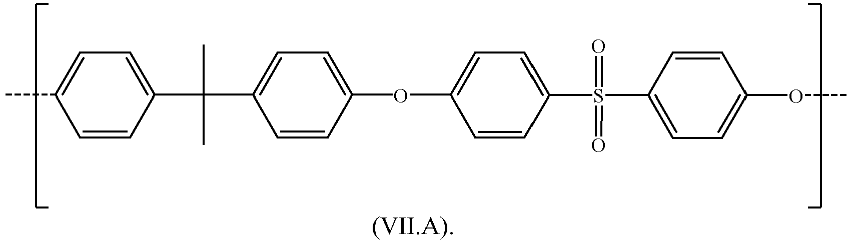

In some embodiments, the PPSU polymer can include no more than about 49 mol%, no more than about 40 mol%, no more than about 30 mol%, no more than about 20 mol%, no more than about 10 mol%, no more than about 5 mol%, or no more than about 1 mol% of the one or more additional recurring units (Rₚₚₛᵤ*). A person of ordinary skill in the art will recognize additional recurring units (Rₚₚₛᵤ*) concentration ranges within the explicitly disclosed ranges are contemplated and within the scope of the present disclosure.

In some embodiments, the PPSU concentration can be from about 35 wt.% to about 95 wt.%, from about 40 wt.% to about 90 wt.%, from about 25 wt.% to about 85 wt.% or from about 50 wt.% to about 80 wt.%, based on the total weight of the PPSU/PE blends. A person of ordinary skill in the art will recognize additional PPSU concentration ranges within the explicitly disclosed ranges are contemplated and within the scope of the present disclosure.

In some embodiments, the PPSU/PE blend can include additional, distinct PPSU polymers. The additional, distinct PPSU polymers can include those PPSU polymers described above. In such embodiments, the weight ratio of the PPSU polymer to the combined weight of the PPSU polymer and the additional, distinct PPSU polymer (weight PPSU/(weight PPSU+ total weight additional, distinct PPSU polymers)) is at least about 0.5, at least about 0.6, at least about 0.7, at least about 0.8, at least about 0.9, at least about 0.95, or at least about 0.99. In some embodiments, the weight ratio of the PPSU polymer to the combined weight of the PPSU polymer and the additional, distinct PPSU polymer can be 1. A person of ordinary skill in the art will recognize additionally weight ratio ranges within the explicitly disclosed ranges are contemplated and within the scope of the present disclosure.

### Impact Modifier

The PPSU/PE blends of interest herein include at least one impact modifier. In general, the impact modifier can be selected to impart useful properties to the PPSU/PE blends, such as desirable tensile elongation at yield and break. In some embodiments, a rubbery low-modulus functionalized polyolefin impact modifier with a glass transition temperature ("T_{g}") lower than 0° C is desirable. Functionalized polyolefin impact modifiers having a T_{g} < 0° C include, but are not limited to, those disclosed in U.S. patent number 5,436,294 to Desio et al., filed March 3, 1994 and entitled "Polyphthalamide Blends," and U.S. patent number 5,447,980 to Reichmann, filed September 16, 1993 and entitled "Stabilized Polyamide Fiber". Additionally, desirable impact modifiers include, but are not limited to, polyolefins, preferably functionalized polyolefins, and especially elastomers containing functionalized ethylene copolymers, including but not limited to, styrene ethylene butylene styrene ("SEBS") and ethylene propylene diene monomer (M-class) rubber ("EPDM").

Functionalized polyolefin impact modifiers are available from commercial sources, including maleated polypropylenes and ethylene-propylene copolymers available as Exxelor® PO and maleic anhydride-functionalized ethylene-propylene copolymer rubber comprising about 0.6 weight percent pendant succinic anhydride groups, such as Exxelor® RTM. VA 1801 from the Exxon Mobil Chemical Company; acrylate-modified polyethylenes available as Surlyn®, such as Surlyn® 9920, methacrylic acid-modified polyethylene from the DuPont Company; and Primacor®, such as Primacor® 1410 XT, acrylic acid-modified polyethylene, from the Dow Chemical Company; maleic anhydride-modified SEBS block copolymer, such as Kraton® FG1901X, a SEBS that has been grafted with about 2 weight % maleic anhydride, available from Kraton Polymers; maleic anhydride-functionalized EPDM terpolymer rubber, such as Royaltuf® 498, a 1 % maleic anhydride functionalized EPDM, available from the Crompton Corporation. Suitable functional groups on the impact modifier include chemical moieties that can react with end groups of the semi-aromatic polyester to provide enhanced adhesion to the matrix polymer(s).

Other desirable functionalized impact modifiers include, but are not limited to, ethylene-higher alpha-olefin polymers and ethylene-higher alpha-olefin-diene polymers that have been provided with reactive functionality by being grafted or copolymerized with suitable reactive carboxylic acids or their derivatives such as, for example, acrylic acid, methacrylic acid, maleic anhydride or their esters, and will have a tensile modulus up to about 50,000 psi determined according to ASTM D-638. Suitable higher alpha-olefins include, but are not limited to, C3 to C8 alpha-olefins such as, for example, propylene, butene-1, hexane 1 and styrene. Alternatively, copolymers having structures comprising such units may also be obtained by hydrogenation of suitable homopolymers and copolymers of polymerized 1-3 diene monomers. For example, polybutadienes having varying levels of pendant vinyl units are readily obtained, and these may be hydrogenated to provide ethylene-butene copolymer structures. Similarly, hydrogenation of polyisoprenes may be employed to provide equivalent ethylene-isobutylene copolymers.

For the PPSU/PE blends described herein, excellent results were obtained with reactive impact modifiers containing ethylene-based elastomers. In particular, excellent results were obtain with functionalized impact modifiers that are copolymers of ethylene and glycidyl methacrylate and terpolymers of ethylene, acrylic ester and glycidyl methacrylate. The aforementioned reactive impact modifiers are commercially available from Arkema (Bristol, PA, USA) under the trade names Lotader® AX8840 and Lotader® AX8900, respectively.

Other impact modifiers useful herein include those described in U.S. 6,765,062 (Ciba Specialty Chemicals Corporation) and EP 901 507 B1 (DuPont). Still other impact modifiers useful herein include acrylic impact modifiers commercialized as Paraloid® impact modifiers by Rohm & Haas.

In some embodiments, the reactive impact modifier can be free of acrylic ester moieties. In some embodiments, the impact modifier can have no more than about 1 mol%, no more than about 5 mol%, no more than about 10 mol%, no more than about 20 mol%, no more than about 30 mol% or no more than about 35 mol% acrylic ester moieites. In some embodiments, the impact modifier can have at least 10 mol%, at least 15 mol%, at least 20 mol% at least 25 mol%, or at least 30 mol% acrylic ester moieties. A person of ordinary skill in the art will recognized additional acrylic ester moiety concentration ranges within the explicitly disclosed ranges are contemplated and within the scope of the present disclosure.

The PPSU/PE blends of interest herein can have an impact modifier concentration that is at least about 8 wt%, relative to the total weight of the PPSU/PE blend. It has been surprisingly discovered that if the impact modifier concentration is less than about 8 wt%, the impact performance of the blend can be undesirably reduced. In some embodiments, the PPSU/PE blends have an impact modifier concentration that is at least about 8.5 wt.%, at least about 9 wt.%, at least about 9.5 wt.% or at least about 10 wt.%, relative to the total weight of the PPSU/PE blend. In some embodiments, the impact modifier concentration is no more than about 20 wt.%, no more than about 17 wt.%, no more than about 16 wt.% or no more than about 15 wt.%, relative to the total weight of the PPSU/PE blend. A person of ordinary skill in the art will recognize additional impact modifier concentrations within the explicitly disclosed concentrations are contemplated and within the scope of the present disclosure.

In some embodiments, the PPSU/PE blend can include additional, distinct impact modifiers. The additional, distinct impact modifiers can include those impact modifiers described above. In such embodiments, the weight ratio of the impact modifier to the combined weight of the impact modifier and the additional, distinct impact modifier (weight impact modifier /(weight impact modifier + total weight additional impact modifiers)) is at least about 0.5, at least about 0.6, at least about 0.7, at least about 0.8, at least about 0.9, at least about 0.95, or at least about 0.99. In some embodiments, the weight ratio of the impact modifier to the combined weight of the impact modifier and the additional, distinct impact modifier can be 1. A person of ordinary skill in the art will recognize additionally weight ratio ranges within the explicitly disclosed ranges are contemplated and within the scope of the present disclosure.

### The Aromatic Polycarbonate Polymer

The PPSU/PE blend can optionally include one or more aromatic polycarbonate polymers. It has been discovered that the addition of an aromatic polycarbonate polymer to the PPSU/PE blends described herein can synergistically improve impact performance. As used herein, an "aromatic polycarbonate polymer" refers to any polymer in which at least 50 mol% of the recurring units are recurring unit (R_{pc}) containing at least one arylene monomer and at least one carbonate monomer (-O-C(=O)-O-). In some embodiments, the aromatic polycarbonate polymer can have at least about 60 mol%, at least about 80 mol%, at least about 90 mol%, at least about 95 mol%, or at least about 99 mol% of the recurring unit (R_{pc}). A person of ordinary skill in the art will recognize additional ranges of recurring unit (R_{pc}) concentration within the explicitly disclosed ranges is contemplated and within the scope of the present disclosure.

In some embodiments, the recurring (R_{pc}) can be represented by one the following formulae: 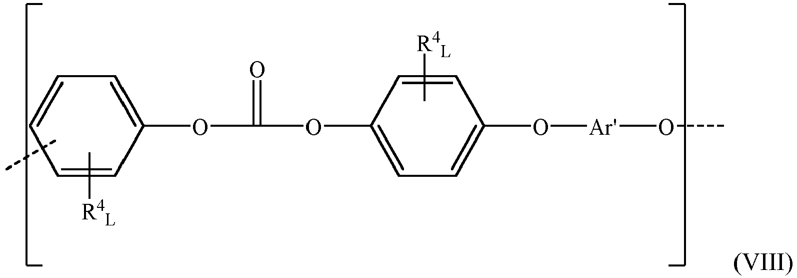 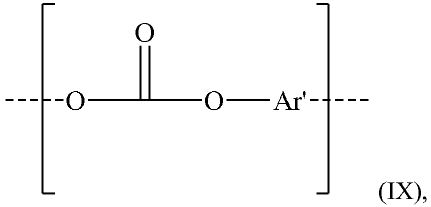 where R⁴, at each instance, is independently selected from the group consisting of a halogen, a C₁-C₂₀ alkyl, a C₅-C₁₅ cycloalkyl, a C₁-C₂₀ alkenyl, an alkynyl, a C₁-C₂₀ aryl, a C₁-C₂₀ alkylaryl, a C₁-C₂₀ aralkyl, an ether, a thioether, carboxylic acid, an ester, an amide, an imide, an alkali or alkaline earth metal sulfonate, an alkyl sulfonate, an alkali or alkaline earth metal phosphonate, an alkyl phosphonate, an amine, a quaternary ammonium and any combination thereof; Ar' is an aromatic mono- or polynuclear group; and L, at each instance, is an independently selected integer ranging from 0 to 4.

In some embodiments, Ar' can be selected from a moiety containing one or more fused benzenic rings, including but not limited to naphthylenes (*e.g.,* 2,6-naphthylene), anthrylenes (*e.g.,* 2,6-anthrylene), phenanthrylenes (*e.g*., 2,7-phenanthrylene), naphthacenylenes and pyrenylenes; or a moiety containing an aromatic carbocyclic system including from 5 to 24 atoms, at least one of which is a heteroatom (*e.g*., pyridines, benzimidazoles, and quinolones). The hetero atom can be N, O, Si, P or S. In some embodiments, the hetero atom can be N, O or S.

In some embodiments, Ar' can be represented by one of the following formulae: 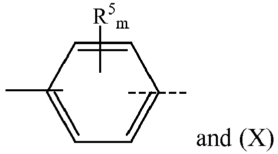 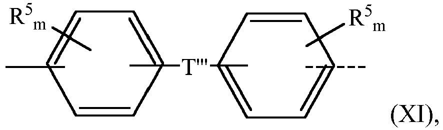 where R⁵, at each instance, is independently selected from the group consisting of a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, amine, a quaternary ammonium and any combination thereof; where T'" is selected from a C₁-C₂₀ alkyl, a C₅-C₁₅ cycloalkyl, a C₁-C₂₀ aryl, a C₁-C₂₀ alkylaryl, a C₁-C₂₀ aralkyl, a C₁-C₂₀ alkenyl, and a halogen; and where m, at each instance, is an independently selected integer ranging from 0 to 4.

In some embodiments, the Ar' can be represented by the following formula: 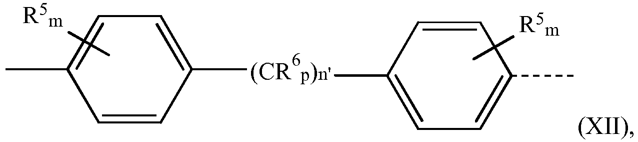 where R⁶, at each instance, is independently selected from the group consisting of a halogen, an alkyl, a perhalogenated alkyl, an alkenyl, a perhalogenated alkynyl, an aryl, a perhalogenated aryl, an ether, a thioether, an ester, an amide, an imide, an alkali or alkaline earth metal sulfonate, an alkyl sulfonate, an alkali or alkaline earth metal phosphonate, an alkyl phosphonate, an amine, an quaternary ammonium, and any combination thereof; where m, at each instance, is an independently selected integer ranging from 0 to 4; where n' is an integer from 1 to 20; and where p, at each instance, is an independently selected integer ranging from 0 to 2. In some such embodiments, each R⁶ can independently be a C₁-C₂₀ alkyl including, but not limited to, a methyl, an ethyl, an n-propyl; an isopropyl, or a butyl (n-, iso, sec or tert). In some embodiments, n' can be 1 and each p can be 2. In some such embodiments, each R⁶ can be a methyl group.

The aromatic polycarbonate polymer can be free of branching or it can be branched. The aromatic polycarbonate can be semi-crystalline (it has a melting temperature) or amorphous (it has no melting temperature, but has a glass transition temperature). In some embodiments, the aromatic polycarbonate is preferably amorphous. The aromatic polycarbonate polymer can be synthesized by methods known in the art. For example, aromatic polycarbonate polymers of formula (VIII) can be synthesized by polycondensation of a diphenyl carbonate monomer and an aromatic diol monomer. As a further example, aromatic polycarbonate polymers of Formula (IX) can be synthesized by the polycondensation of a phosgene monomer and an aromatic diol monomer. Desirable aromatic polycarbonate polymers and their corresponding syntheses are discussed in U.S. patent application publication number 2010/0016518 to El-Hibri et al., filed February 26, 2009 and entitled "Aromatic Polycarbonate Composition".

In addition to recurring unitt (R_{pc}), the aromatic polycarbonate polymer can include one or more additional recurring units (R_{pc}*) distinct from recurring unit (R_{pc}). Desirable recurring units (R_{pc}*) include, but are not limited to, those described above with respect to recurring unit (R_{pc}). In some such embodiments, the aromatic polycarbonate polymer can include no more than about 49 mol%, no more than about 40 mol%, no more than about 30 mol%, no more than about 20 mol%, no more than about 10 mol%, no more than about 5 mol%, or no more than about 1 mol% of the one or more additional recurring units (R_{pc}*). A person of ordinary skill in the art will recognize additional recurring unit (R_{pc}*) concentration ranges within the explicitly disclosed ranges are contemplated and within the scope of the present disclosure.

In some embodiments, the aromatic polycarbonate concentration can be from about 1 wt.% to about 50 wt.%, to about 25 wt.%, to about 20 wt.% or to about 15 wt.%, relative to the total weight of the PPSU/PE blend. In some embodiments, the PPSU/PE blend can have an aromatic polycarbonate concentration from about 0.5 wt.% to about 20 wt.%, from about 1 wt.% to about 20 wt.%, from about 2 wt.% to about 20 wt.% or from about 5 wt.% to about 15 wt.%, relative to the total weight of the PPSU/PE blend.

In some embodiments, the PPSU/PE blend can include additional, distinct polycarbonate polymers. The additional, distinct polycarbonate polymers can include those polycarbonate polymers described above. In such embodiments, the weight ratio of the polycarbonate polymer to the combined weight of the polycarbonate polymer and the additional, distinct polycarbonate polymer (weight polycarbonate/(weight polycarbonate + total weight additional, distinct polycarbonate)) is at least about 0.5, at least about 0.6, at least about 0.7, at least about 0.8, at least about 0.9, at least about 0.95, or at least about 0.99. In some embodiments, the weight ratio of the polycarbonate polymer to the combined weight of the polycarbonate polymer and the additional, distinct polycarbonate polymer can be 1. A person of ordinary skill in the art will recognize additionally weight ratio ranges within the explicitly disclosed ranges are contemplated and within the scope of the present disclosure.

### The PAES Polymers

The PPSU/PE blends can optionally include one or more PAES polymers distinct from the PPSU polymer. As used herein, a PAES polymer refers to any polymer in which at least 50 mol.% of the recurring units are recurring unit (Rₚₛ) containing at least one arylene group, at least one ether group (-O-) and at least one sulfone group [-S(=O)₂-]. In some embodiment, the PAES polymer can have at least about 60 mole percent ("mol%"), at least about 80 mol%, at least about 90 mol%, at least about 95 mol%, or at least about 99 mol% of the recurring unit (Rₚₛ). A person of ordinary skill in the art will recognize additional recurring unit (Rₚₛ) concentrations within the explicitly disclosed ranges are contemplated and within the scope of the present disclosure.

The arylene group of the PAES polymer can be an aromatic radical having from 6 to 36 carbon atoms, where one or more of the carbon atoms is optionally substituted by at least one substituent selected from the group consisting of a halogen, an alkyl, an alkenyl, an alkynyl, an aryl, an arylalkyl, a nitro, a cyano, an alkoxy, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine and an quaternary ammonium.

In some embodiments, the recurring unit (R_{PS}) can be represented by the following formula:

-Ar¹-(T'-Ar²)ₙ-O-Ar³-SO₂-[Ar⁴-(T-Ar²)_{n"}-SO₂]_{m'}-Ar⁵-O- (XIII)

where Ar¹, Ar², Ar³, Ar⁴, and Ar⁵ are independently selected from the group consisting of an aromatic mono- and polynuclear group; T and T' are independently selected from the group consisting of a bond and a divalent group optionally including one or more than one heteroatom; n", and m' are independently selected integers from 0 to 5. In some embodiments, Ar¹, Ar², Ar³, Ar⁴ and Ar⁵ can each be represented by a formula independently selected from the following group of formulae: 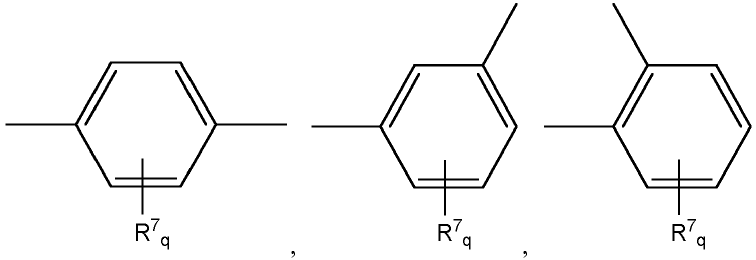 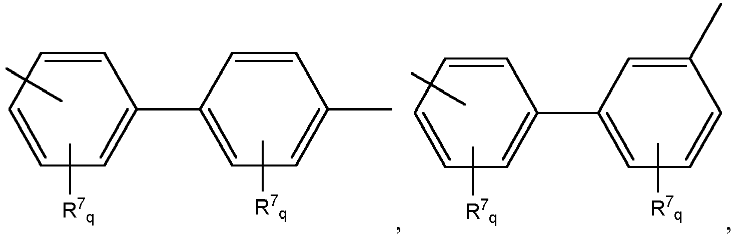 and 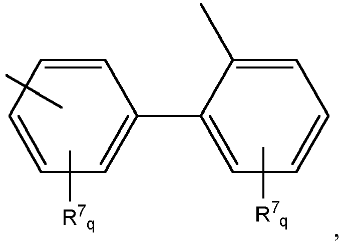 where R⁷, at each instance, is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine, quaternary ammonium and any combination thereof and where q, at each instance, is an independently selected integer from 0 to 4.

In some embodiments, Ar² may further be selected from the group consisting of fused benzenic rings (*e.g*., naphthylenes and 2,6-naphthylene), anthrylenes (*e.g*., 2,6-anthrylene) and phenanthrylenes (*e.g*., 2,7-phenanthrylene), naphthacenylenes and pyrenylenes groups; an aromatic carbocyclic system including from 5 to 24 atoms, at least one of which is a heteroatom (*e.g*., pyridines, benzimidazoles, and quinolones). The hetero atom is can be N, O, Si, P or S. In some embodiments, the hetero atom can be N, O or S.

In some embodiments, T and T' of formula (XIII) can be independently selected from a bond; -CH₂-; -O-; -SO₂-; -S-; -C(O)-; -C(CH₃)₂-; -C(CF₃)₂-; -C(=CCl₂)-; -C(CH₃)(CH₂CH₂COOH)-; -N=N-; -R^{a}C=CR^{b-}, where each R^{a} and R^{b}, independently of one another, is a hydrogen or a C₁-C₁₂-alkyl, C₁-C₁₂-alkoxy, or C₆-C₁₈-aryl group; -(CH₂)ₙ- and -(CF₂)ₙ- with n = integer from 1 to 6; an aliphatic divalent group, linear or branched, of up to 6 carbon atoms; and combinations thereof.

In some embodiments, the recurring units (Rₚₛ) can be represented by a formula selected from the following group of formulae: 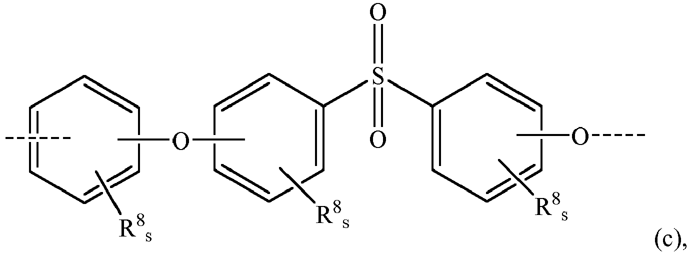 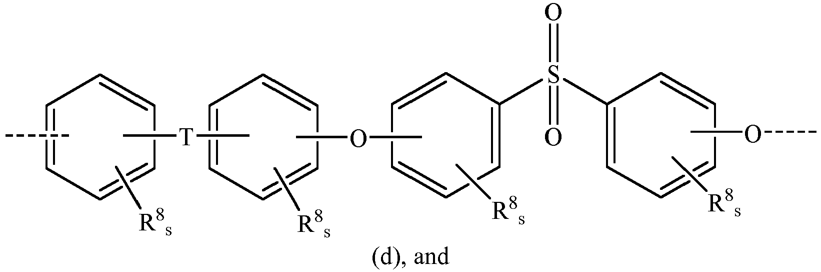 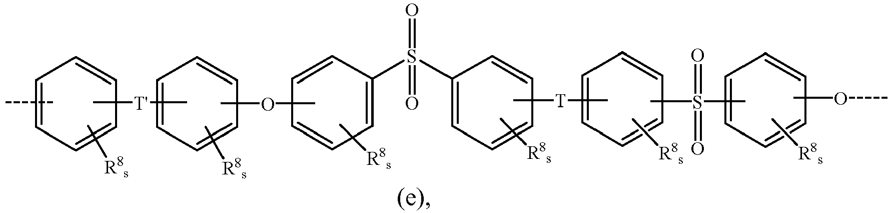 where R⁸, at each instance, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine, quaternary ammonium and any combination thereof; s, at each instance, is an independently selected integer ranging from 0 to 4; and T and T' are independently selected from the group consisting of a bond, -CH₂-; -O-; -SO₂-; -S-; -C(O)-; -C(CH₃)₂- ; -C(CF₃)₂-; -C(=CCl₂)-; -C(CH₃)(CH₂CH₂COOH)-; -N=N-; -R^{a}C=CR^{b}-, where each R^{a} and R^{b}, independently of one another, is a hydrogen or a C₁-C₁₂-alkyl, C₁-C₁₂-alkoxy, or C₆-C₁₈-aryl group; -(CH₂)_{n'''}- and -(CF₂)_{n'''}- with n''' being an integer from 1 to 6; an aliphatic divalent group, linear or branched, of up to 6 carbon atoms; and combinations thereof.

In some embodiments, the PAES polymer can be a poly(biphenyl ether sulfone) while in other embodiments, the PAES polymer can be a polyethersulfone, a polyetherethersulfone or a bisphenol A polysulfone. As used herein, a poly(biphenyl ether sulfone) refers to any polymer in which at least 50 mol% of the recurring units are recurring unit (Rₚₛₐ) containing at least one ether group (-O-), at least one sulfone group [-S(=O)₂ -] and at least two groups (G*), each group (G*) independently selected form the group consisting of phenylenes, naphthylenes (*e.g.,* 2,6-naphthylene), anthrylenes (*e.g*., 2,6-anthrylene) and phenanthrylenes (*e.g.,* 2,7-phenanthrylene), naphthacenylenes and pyrenylenes; where each of the groups (G*) are joined to at least one group (G*) different from itself, directly by at least one single bond and, optionally in addition, by at most one methylene group. Accordingly, groups (G*) can be joined together to form groups including, but not limited to, biphenylene groups (*e.g.,* p-biphenylene), 1,2'-binaphthylene groups, terphenylene groups (*e.g*., p-terphenylene) and fluorenylene groups (divalent groups derived from fluorene). In some embodiments, at least about 60 mol%, at least about 70 mol%, at least about 80 mol%, at least about 90 mol%, at least about 95 mol%, or at least about 99 mol% of the recurring units of the poly(biphenyl ether sulfone) are recurring units (R_{PSa}).

In some embodiments, the recurring unit (R_{PSa}) can be recurring units of formula (XIII), as defined above, with the proviso that at least one Ar¹ through Ar⁵ is an aromatic moiety desirably represented by a formula selected from the following group of formulae consisting of: 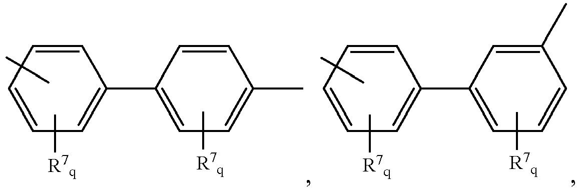 and

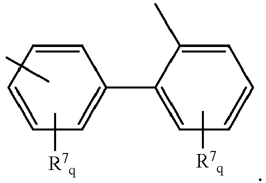

In some embodiments, recurring unit (R_{PSa}) can be represented by one of the following formulae: 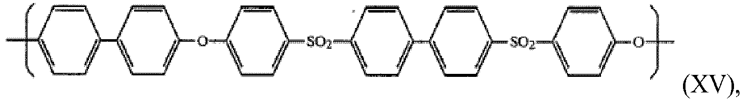 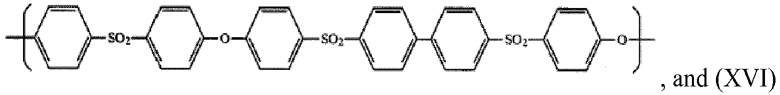 and mixtures thereof.

In some embodiments, the PAES can be a polyetherethersulfone ("PEES") polymer or a bisphenol A polysulfone polymer. As used herein, a PEES refers to any polymer in which at least 50 mol% of the recurring units are recurring unit (R_{PSb}) of formula: 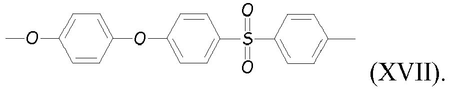 In some embodiments, at least about 60 mol%, at least about 70 mol%, at least about 80 mol%, at least about 90 mol%, at least about 95 mol%, or at least about 99 mol% of the recurring units of the poly(biphenyl ether sulfone) are recurring unit (R_{PSb}).

In some embodiments, the PAES is a bisphenol A polysulfone ("PSU") polymer. As used herein, PSU refers to any polymer in which at least 50 mol% of the recurring units are recurring unit (R_{PSc}) of formula:

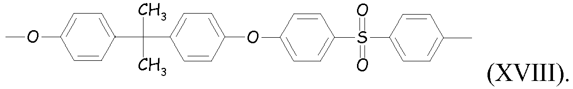

In some embodiments, at least about 60 mol%, at least about 70 mol%, at least about 80 mol%, at least about 90 mol%, at least about 95 mol%, or at least about 99 mol% of the recurring units of the poly(biphenyl ether sulfone) are recurring unit (R_{PSc}). PSU can be prepared by methods known to the person of ordinary skill in the art. Additionally, PSU is commercially available as UDEL® PSU from Solvay Specialty Polymers USA, L.L.C.

### Additives

In some embodiments, the PPSU/PE blend can include one or more additives. Additives can include, but are not limited to, ultraviolet light stabilizers, heat stabilizers, antioxidants, pigments, processing aids, lubricants, flame retardants (halogen containing or halogen free), and/or a conductivity additive including, but not limited to, carbon black and carbon nanofibrils.

In general, the PPSU/PE blends described herein are highly colourable. Correspondingly, desirable color can be imparted to the compositions using a relatively modest amount of pigments. In general, increased pigment concentrations can undersirably reduce the impact performance of a polymer composition. Highly colourable polymer compositions are desirable because they can help to promote increased impact performance. Pigments for whiteness include, but are not limited to, TiO₂, zinc sulphide, barium sulphate, calcium carbonate, and any combination thereof. Additionally any of a broad range of chromatic organic and/or inorganic pigments can be used to appropriately tune the color to the desired target. In some embodiments, the concentration of the pigment can be no more than about 20 parts per hundred resin ("phr"), no more than about 17 phr, no more than about 15 phr, no more than about 10 phr, no more than about 6 phr, no more than about 5 phr or no more than bout 3 phr. In some embodiments, the concentration of the pigment can be no more than about 20 wt.%, no more than about 15 wt.%, no more than about 10 wt.%, no more than about 5 wt.% or no more than about 3 wt.%, relative to the total weight of the PPSU/PE blend. In some embodiments, the concentration of the pigment can be from about 1 wt.% to about 10 wt.%, relative to the total weight of the PPSU/PE blend. A person of ordinary skill in the art will recognize additional pigment concentration ranges within the explicitly disclosed ranges are contemplated and within the scope of the present disclosure.

### Articles

The PPSU/PE blends described herein can be desirable incorporated as a component in a mobile electronic device. As used herein, a "mobile electronic device" refers to an electronic device that is intended to be conveniently transported and used in various locations. A mobile electronic device can include, but is not limited to, a mobile phone, a personal digital assistant ("PDA"), a laptop computer, a tablet computer, a wearable computing device (*e.g.,* a smart watch and smart glasses), a camera, a portable audio player, a portable radio, a global position system receiver, and portable game console.

In some embodiments, at least a portion of a component of a mobile electronic device can be exposed to the external environment of the mobile electronic device (*e.g.,* at least a portion of the component is in contact with the environment external to the mobile electronic device). For example, at least a portion of the component can form at least a portion of the external housing of the mobile electronic device. In some such embodiments, the component can be a full or partial "frame" around the periphery of the mobile electronic device, a beam in the form of a lattice work, or a combination thereof. As another example, at least a portion of the component can form at least a portion of an input device. In some such embodiments, a button of the electronic device can include the component. In some embodiments, the component can be fully enclosed by the electronic device (*e.g.,* the component is not visible from an observation point external to the mobile electronic device).

In some embodiments, the component can be of a mounting component with mounting holes or other fastening device, including but not limited to, a snap fit connector between itself and another component of the mobile electronic device, including but not limited to, a circuit board, a microphone, a speaker, a display, a battery, a cover, a housing, an electrical or electronic connector, a hinge, a radio antenna, a switch, or a switchpad. In some embodiments, the mobile electronic device can be at least a portion of an input device

The components of the mobile electronic device can be fabricated using methods well known in the art. For example, the mobile electronic device components can be fabricated by methods including, but not limited to, injection molding, blow molding or extrusion molding. In some embodiments, the PPSU/PE blends can be formed into pellets (*e.g*., having a substantially cylindrical body between two ends) by methods known in the art including, but not limited to, injection molding. In some such embodiments, mobile electronic device components can be fabricated from the pellets.

In some embodiments, the mobile electronic device components can be coated with metal by methods well known in the art, including but not limited to, vacuum deposition (including various methods of heating the metal to be deposited), electroless plating, electroplating, chemical vapor deposition, metal sputtering, and electron beam deposition. Although the metal may adhere well to the components without any special treatment, in some embodiments, methods well known in the art can be used to improve adhesion. Such methods include, but are not limited to, abrasion to roughen the synthetic resin surface, addition of adhesion promotion agents, chemical etching, functionalization of the surface by exposure to plasma and/or radiation (for instance laser or UV radiation) or any combination of these. Also, in some embodiments, metal coating methods can include at least one step where the mobile electronic device component is immersed in an acid bath. More than one metal or metal alloy can be plated onto the components containing the PPSU/PE blend. For example, one metal or alloy can be plated directly onto the synthetic resin surface because of its good adhesion, and another metal or alloy can be plated on top of the previous plating because it has a higher strength and/or stiffness. Useful coating metals and alloys include, but are not limited to, copper, nickel, iron-nickel, cobalt, cobalt-nickel, and chromium, and combinations of these in distinct layers. In some embodiments, the surface of the mobile electronic device component can be fully or partially coated with metal. In some embodiments, more than about 50% or about 100% of the surface area of the component can be metal coated. In different areas of the component the thickness and/or the number of metal layers, and/or the composition of the metal layers may vary. The metal may be coated in patterns to efficiently improve one or more properties in certain sections of the mobile electronic device component.

### EXAMPLES

The following examples demonstrate the mechanical and anti-staining properties of PPSU/PEN blends. Each testing sample included a PPSU polymer, a PEN polymer, an impact modifier and a white pigment. The PPSU polymer used was either Radel® PPSU R-5100 LC100 or Radel® PPSU R-5900 NT, both commercially available from Solvay Specialty Polymers USA, L.L.C. (Alpharetta, GA, USA). Radel® PPSU R-5100 LC100 ("PPSU 1") and Radel® PPSU R-5900 NT ("PPSU 2") have a melt flow rate ("MFR") of between 14-20g/10 min. and 26 - 36 g/10 min. as measured according to ASTM D1238 at a temperature of 365° C and 5.0 kg weight, respectively. The PEN polymer used was Teonex® TN-8065S, commercially available from Teijin Limited (Tokyo, JP). The impact modifier used with either Lotader® AX8900 ("IM 1") or Lotader® AX8840 ("IM 2"), both commercially available from Arkema (Bristol, PA, USA). Lotader® AX8900 contains acrylic ester moieties while Lotader AX8840 is free of acrylic ester moieties. The white pigment used was either TiPure® R-105 ("TiO₂ 1"), commercially available from DuPont (Wilmington, DE, USA), or Kronos® 2233 ("TiO₂ 2"), commercially available from Kronos Worldwide, Inc. (Dallas, TX, USA). Optionally, some of the samples further contained a PC polymer as Makrolon® 3108, commercially available from Bayer Material Science, Inc. (Pittsburg, PA, USA). Table 1 shows the compositions of the various samples tested.

**TABLE 1**

| Example No. | E1 | E2 | CE1 | E3 | E4 | CE2 | E5 | E6 | E7 | E8 |
|---|---|---|---|---|---|---|---|---|---|---|
| PPSU 1 (wt%) | 60.0 | 60.0 | - | 60.0 | 60.0 | 60.0 | 60.0 | 60.0 | 50.0 | 70.0 |
| PPSU 2 (wt%) | - | - | 60.0 | - | - | - | - | - | - | - |
| PEN (wt%) | 20.0 | 20.0 | 20.0 | 20.0 | 18.0 | 22.0 | 20.0 | 30.0 | 26.67 | 13.34 |
| PC (wt%) | 10.0 | 10.0 | 10.0 | 10.0 | 9.0 | 11.0 | 10.0 | - | 13.33 | 6.66 |
| IM 1 (wt%) | 10.0 | 10.0 | 10.0 | - | 13.0 | 7.0 | 5.0 | 10.0 | 10.0 | 10.0 |
| IM 2 (wt%) | - | - | - | 10.0 | - | - | 5.0 | - | - | - |
| TiO₂ 1 (phr) | 6.0 | - | - | - | - | - | - | 5.0 | - | - |
| TiO₂ 2 (phr) | - | 6.0 | 6.0 | 6.0 | 6.0 | 6.0 | 6.0 | - | 6.0 | 6.0 |

For mechanical and chemical testing, each of the blends was pelletized and subsequently extruded to form a test specimen. Prior to pelletization, the PPSU, PEN and/or PC of the blends were dried for at least 16 hours and subsequently blended together with the corresponding impact modifier and white pigment. The resulting formulations were then melt compounded using a Coperion® ZSK-26 extruder to form pellets. Three types of test specimens, each having a thickness of about 0.125 in., were formed from pellets of each blend: (A) ASTM D-638 Type I tensile bars; (B) 5 in. X 0.5 in. X 0.125 in. flexural bars; and (C) 4 in. X 4 in. x 0.125 in. plaques. The test specimens were fabricated by injection molding the pellets of teach formulation.

### Example 1 - Mechanical Performance

This Example 1 demonstrates the mechanical performance of PPSU/PEN blends. In particular, this Example 1 demonstrates the tensile properties and impact performance of PPSU/PEN blends.

To demonstrate mechanical performance, the tensile properties (tensile strength at break, tensile modulus and tensile elongation at break) were measured according to the ASTM D-638 standard using type (A) test specimens and Notched Izod impact resistances were measured according to ASTM D-256 on a Type (B) test specimen machined to meet the dimensional requirements of the ASTM D-256 specification. The results of the mechanical testing are displayed in Table 2, below:

**TABLE 2**

| Example No. | E1 | E2 | CE1 | E3 | E4 | CE2 | E5 | E6 | E7 | E8 |
|---|---|---|---|---|---|---|---|---|---|---|
| Tensile strength (MPa) | 57.0 | 54.7 | 56.3 | 57.4 | 52.5 | 61.0 | 56.5 | 58.0 | 56.0 | 56.8 |
| Tensile Modulus (GPa) | 1.78 | 1.72 | 1.79 | 1.78 | 1.64 | 1.93 | 1.75 | 1.79 | 1.80 | 1.77 |
| Tensile Elongation at Break (%) | 29 | 29 | 32 | 22 | 22 | 27 | 25 | 24 | 44 | 18 |
| Notched Izod Impact (J/m) | 561 | 503 | 258 | 440 | 487 | 196 | 447 | 400 | 517 | 450 |
| Break Type | D | D | M | D | D | B | D | D | D | D |

In Table 2, "D" indicates a ductile break type, "M" indicates a mixed break type and "B" indicates a brittle break type.

Table 2 demonstrates that test specimens prepared from a PPSU polymer having a melt flow viscosity of less than about 20 g/10 min. had improved impact performance. Comparison of test specimens in E2 and CE1 in Tables 1 and 2 demonstrates that test specimen E2 (PPSU 1; MFV: 26 - 36 g/10 min.) had a notched Izod impact of about 503 J/m while the corresponding value for test specimen CE1 (PPSU 2; MFV: 26 - 36 g/10 min.) was only about 258 J/m. Furthermore, the failure at break was qualitatively different, as evidenced by the observation that test specimen E2 had a ductile failure at break while test specimen CE1 and a mixed failure at break. Additionally, Table 2 demonstrates that test specimens having more than about 8 wt.% impact modifier also had improved impact performance. Comparison of test specimens E2 and E4 with CE2 in Tables 1 and 2 demonstrates that test specimens E2 (10 wt.% IM1) and E4 (13 wt.% IM1) had notched Izod impact values of 503 J/m and 487 J/m, respectively, while test specimen CE2 (7 wt.% IM2) had a notched Izod impact of about 196 J/m. Moreover, the failure at break was qualitatively different for test specimens E2 and E4 (both ductile) relative to test specimen CE2 (brittle). In all cases, test specimens E1 - E6 all showed excellent impact performance, having a lowest value of about 400 J/m.

Table 2 also demonstrates that synergistic improvement that the PC polymer has on the tested polymer blends. Comparison of E1 with E6 in Tables 1 and 2 demonstrates that the notched Izod impact of test specimen E1 (PPSU/PEN/PC blend) was about 561 J/m while that of E6 (PPSU/PEN blend) was about 400 J/m.

### Example 2 - Chemical Performance

This Example 2 demonstrates the chemical performance of PPSU/PEN blends. In particular, this Example 2 demonstrates the whiteness, color stability, chemical resistance, and anodization resistance of PPSU/PES blends.

The whiteness of the test specimens were demonstrated according to the CIE L-a-b coordinates standard, where the L* coordinate represents the lightness (black to white) scale, the a* coordinate represents the green-red chromaticity and the b* scale represents the blue-yellow chromaticity. The whiteness of a test-specimen was considered acceptable if the L* value was greater than 90.0 and the combined absolute values of the chromaticity coordinates a* and b* (|a*|+|b*|) were less than 4.0 units. Chemical resistance was demonstrated relative to sunscreen. Chemical resistance against sunscreen cream was tested by applying Banana Boat® SPF30 broad spectrum sunscreen cream to type (B) test specimens that were mounted onto a Bergen parabolic variable strain flexural jig, which varied the applied strain on the plastic material from about zero to about 2.0%, to form stressed assemblies. As used herein, x% applied strain is the strain required to elongate the molded sample of the PPSU/PE blend by x%. For example, if the length of the molded sample was 1 in., 2% applied strain refers to the strain required to elongate the molded sample to 1.02 in. in the direction of the applied strain. The stressed assemblies were aged in a controlled humidity environmental chamber at a temperature of about 65 °C and relative humidity of about 90% for about 24 hours. Subsequently, the assemblies were removed from the chamber and the type (B) test specimens mounted on the strain jigs were inspected for any signs of cracking or crazing. Critical strain to failure was recorded as the lowest strain level on the parabolic fixture on which cracking or crazing was observed. The results of whiteness and color stability testing are demonstrated in Table 3.

**TABLE 3**

| Example No. | E1 | E2 | CE1 | E3 | E4 | CE2 | E5 | E6 | E7 | E8 |
|---|---|---|---|---|---|---|---|---|---|---|
| Sunscreen Chemical Resistance | | | | | | | | | | |
| Critical Strain to Initiate Failure (%) | >2.0 | >2.0 | >2.0 | >2.0 | >2.0 | >2.0 | >2.0 | >2.0 | >2.0 | >2.0 |

| Tensile Properties Post Acid Treatment | | | | | | | | | | |
|---|---|---|---|---|---|---|---|---|---|---|
| Tensile Strength (MPa) | 56.8 | 54.3 | 56.3 | 58.0 | 51.8 | 60.5 | 56.3 | 57.7 | 55.1 | 55.9 |
| Tensile Modulus (GPa) | 1.83 | 1.76 | 1.83 | 1.87 | 1.67 | 1.91 | 1.79 | 1.81 | 1.77 | 1.75 |
| Tensile Elongation at Break (%) | 26 | 28 | 29 | 22 | 22 | 29 | 22 | 26 | 36 | 19 |

| Color Data | | | | | | | | | | |
|---|---|---|---|---|---|---|---|---|---|---|
| L* | 92.7 | 92.5 | 93.1 | 93.0 | 93.2 | 92.6 | 93.2 | 94.1 | 92.1 | 92.6 |
| a* | 0.04 | -0.09 | -0.06 | -0.19 | -0.20 | -0.19 | -0.19 | -0.08 | -0.02 | -0.15 |
| b* | 3.59 | 2.42 | 2.38 | 2.15 | 2.59 | 2.40 | 2.32 | 3.78 | 1.99 | 3.44 |

In Table 3, values for Critical Strain to Initiate Failure that are > 2.0% indicate that there was no observable effect up to the maximum applied strain of 2.0%.

Table 3 demonstrates that samples tested had outstanding chemical resistance in conjunction with the improved impact performance. Referring to Table 3, each of samples E1 - E8 have critical strain to failure of greater than 2.0%. In general, compositions having a critical strain to failure of above 1% are regarded as having good chemical resistance performance. Correspondingly, Table 3 demonstrates that the samples with improved impact resistant also had outstanding chemical resistance.

Anodization resistance was demonstrated by acid bath immersion, as described above. In particular, the anodization process was simulated by immersing type (A) test specimens in about 70% sulfuric acid at about 23 °C for 24 hours. After acid bath immersion, the test specimens were removed, washed with water and subsequently tested for their tensile properties (tensile strength at break, tensile modulus and tensile elongation at break) according to the ASTM-D368 standard. The tensile properties before (Table 2) and after (Table 3) acid bath immersion served as an indicator of the material's ability to withstand anodization processes. As is evident from the tensile property data in Tables 2 and 3, there is very little if any degradation in the mechanical performance of these materials after exposure to harsh acidic conditions as represented by the 70% sulfuric acid solution used in these examples.

The embodiments above are intended to be illustrative and not limiting. In addition, although the present invention has been described with reference to particular embodiments, those skilled in the art will recognize that changes can be made in the form and detail without departing from the spirit and scope of the invention.

### Additional Inventive Concepts

A first inventive concept is directed to a polymer blend comprising an aromatic polyester polymer; a polyphenylsulfone ("PPSU") polymer; and a reactive impact modifier comprising an elastomer. A second inventive concept is directed to the polymer blend of the first inventive concept where the aromatic polyester polymer comprising recurring units ("Rₚₑ") represented by one of the following formulae (I) - (III): 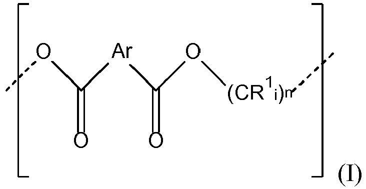 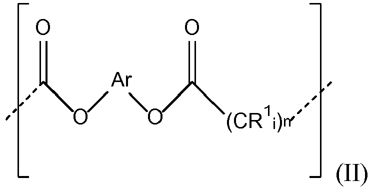 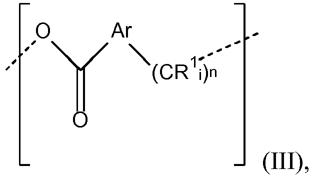 where Ar is an arylene group containing at least 2 fused benzenic rings having at least two carbons in common; where R¹, at each instance, is independently selected from the group consisting of a halogen, an alky, an alkenyl, an aryl, a aryl, an ether, a thioether, an ester, an amide, an imide, an alkali or alkaline earth metal sulfonate, an alkyl sulfonate, an alkali or alkaline earth metal phosphonate, an alkyl phosphonate, an amine, an quaternary ammonium, and any combination thereof; where n is an integer from 1 to 20; and where i, at each instance, is an integer from 0 to 2.

A third inventive concept is directed to the polymer blend of the first inventive concept wherein the aromatic polyester polymer comprises recurring units ("Rₚₑ") represented by following formula(I):

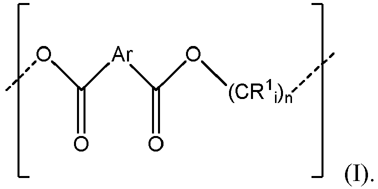

A fourth inventive concept is directed to the polymer blend of the second or third inventive concepts where -(CR¹ᵢ)ₙ- is represented by the formula -CₙH₂ₙ. A fifth inventive concept is directed to the polymer blend of the fourth inventive concept where the moiety -CₙH₂ₙ- is selected from the group consisting of a methyl group; an ethyl group; an n-propyl group; an isopropyl group; an n-butyl group, an iso-butyl group or a tert-butyl group.

A sixth inventive concept is directed to the polymer blend of any of the second through fifth inventive concepts, wherein Ar comprises a napthalate represented by the following formula (IV),

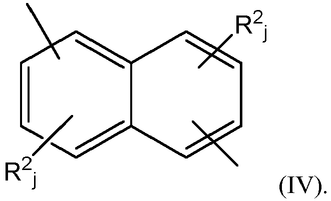

A seventh inventive concept is directed to the polymer blend of any of the second through fifth inventive concepts, wherein Ar comprises a napthalate represented by the following formula (V): 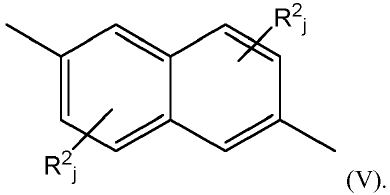 An eighth inventive concept is directed to the polymer blend of the sixth or seventh inventive concept, where each i = 0.

A ninth inventive concept relates to the polymer blend of any of the first through seventh inventive concepts, where the concentration of the semi-aromatic polyester is from about 1 wt.% to about 80 wt.%, from about 2 wt.% to about 70 wt.%, from about 5 wt.% to about 40 wt.%, from about 7 wt.% to about 35 wt%, from about 10 wt.% to about 35 wt.%, from about 12 wt.% to about 35 wt.%, from about 13 wt.% to about 35 wt.% from about 15 wt.% to about 35 wt.%, from about 15 wt.% to about 30 wt.%, from about 15 wt.% to about 27 wt.% or from about 15 wt.% to about 25 wt.%, relative to the total weight of the polymer blend.

A tenth inventive concept is directed to the polymer blend of any of the first through ninth inventive concepts, wherein the PPSU polymer comprises recurring units (Rₚₚₛᵤ) represented by the following formula (VI):

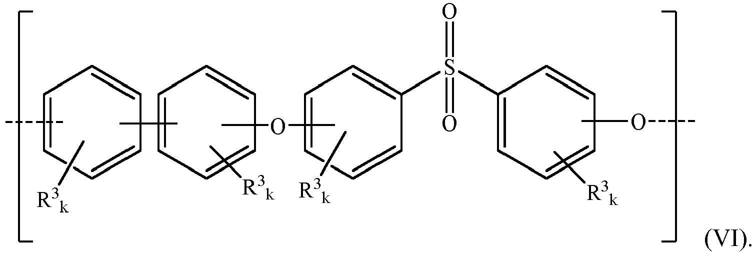

An eleventh inventive concept is directed to the polymer blend of any of the first through ninth inventive concepts, wherein the PPSU polymer comprises recurring units (Rₚₚₛᵤ) represented by the following formula (VII):

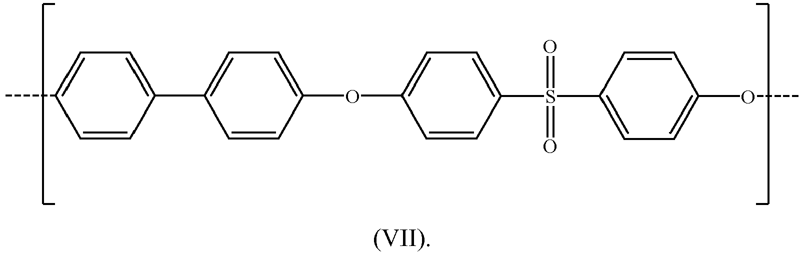

A twelfth inventive concept is related to the polymer blend of any of the first through eleventh inventive concepts where the concentration of the PPSU polymer is no more than about 90 wt.%, at least about 20 wt.%, from about 20 wt.% to about 90 wt.%, from about 30 wt.% to about 85 wt.%, from about 40 wt.% to about 80 wt.%, from about 50 wt.% to about 70 wt.% or from about 55 wt.% to about 65 wt.%, relative to the total weight of the polymer blend. A thirteenth inventive concept relates to the polymer blend of any of the first through eleventh inventive concepts where the PPSU polymer further comprises recurring units (Rₚₚₛᵤ*) represented by the formula (VII.A):

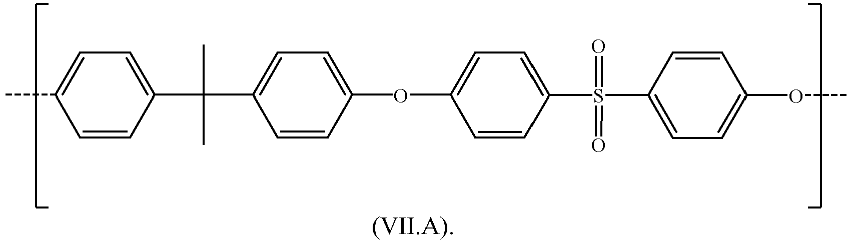

A fourteenth inventive concept is related to the polymer blend of any of the first through thirteenth inventive concepts, where the PPSU polymer comprises a melt flow rate that is no more than about 25 g/10 min., no more than about 20 g/10 min., no more than about 18 g/10 min., no more than about 17 g/ 10 min., no more than about 16 g/10 min., or no more than about 15 g/10 min., as measured according the ASTM D1238 standard at a temperature of 365° C and a weight of 5 kg. A fifteenth inventive concept relates the polymer blend of any of the first through fourteenth inventive concepts where the PPSU polymer comprises a melt flow rate that is at least about 1 g/10 min., at least about 5 g/10 min., at least about 10 g/10 min., or at least about 15 g/10 min., or at least about 18 g/10 min., as measured according the ASTM D1238 standard at a temperature of 365° C and a weight of 5 kg.

A sixteenth inventive concept relates the polymer blend of any of the first through fifteenth inventive concepts, wherein the impact modifier comprises a functionalized polyolefin comprising a polymer including ethylene and glycidyl methacrylate. A seventeenth inventive concept relates to the polymer blend of the sixteenth inventive concept wherein the impact modifier is free of acrylic ester moieties. An eighteenth inventive concept relates the polymer blend of any of the first through seventeenth inventive concepts, wherein the impact modifier concentration is at least about 8 wt%, at least about 8.5 wt.%, at least about 9 wt.%, at least about 9.5 wt.% or at least about 10 wt.%, relative to the total weight of the polymer blend. A nineteenth inventive concept is related to the polymer blend of any of the first through eighteenth inventive concepts wherein the impact modifier concentration is no more than about 20 wt.%, no more than about 17 wt.%, no more than about 16 wt.% or no more than about 15 wt.%, relative to the total weight of the polymer blend.

A twentieth inventive concept is related to the polymer blend of any of the first throught nineteenth inventive concepts wherein the polymer blend further comprising a polycarbonate polymer comprising recurring units (R_{pc}) represented by one of the following formulae (VIII) and (IX): 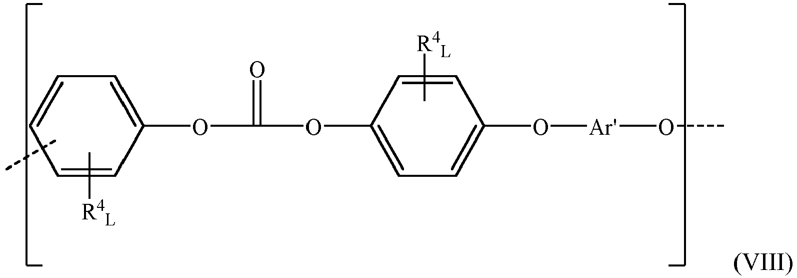 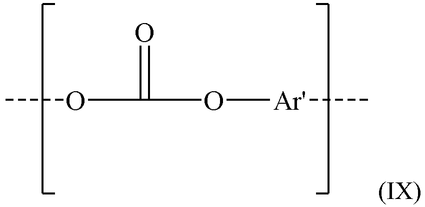 where L, at each instance, is an independently selected integer ranging from 0 to 4 and Ar' is represented by the following formula (XII)

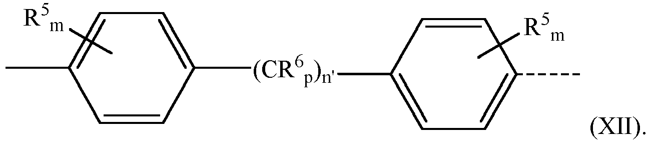

A twenty-first inventive concept relates to the polymer blend of the twentieth inventive concept where the recurring unit (R_{pc}) is represented by the formula (IX). A twenty-second inventive concept relates to the polymer blend of any of the first through twenty-first inventive concepts, wherein the concentration of the aromatic polycarbonate is from 0 wt.% to about 50 wt.%, to about 25 wt.%, to about 20 wt.% or to about 15 wt.%; from about 0.5 wt.% to about 20 wt.%, from about 1 wt.% to about 20 wt.%, from about 2 wt.% to about 20 wt.% or from about 5 wt.% to about 15 wt.%, relative to the total weight of the polymer blend. A twenty-third inventive concept relates to the polymer blend of any of the first through twenty-second inventive concepts, wherein the polymer blend further comprises a PAES polymer distinct from the PPSU polymer.

A twenty-fourth inventive concept relates to the polymer blend of any of the first through twenty-third inventive concepts, wherein the polymer blend comprises a pigment having a concentration of no more than about 20 wt.%, no more than about 15 wt.%, no more than about 10 wt.%, no more than about 5 wt.%, no more than about 3 wt.%, or from about 1 wt.% to about 10 wt.%, relative to the total weight of the polymer blend.

A twenty-fifth inventive concept relates to the polymer blend of any of the first through twenty-fourth inventive concepts, wherein the polymer blend has an notched Izod impact resistance of at least 300 Joules/meter ("J/m"), at least about 350 J/m, or at least about 400 J/m. A twenty-sixth inventive concept relates to the polymer blend of any of the first through twenty-fifth inventive concepts, wherein the polymer blend has an impact resistance of no more than about 1000 J/m, no more than about 800 J/m, no more than about 700 J/m, or no more than about 650 J/m.

A twenty-seventh inventive concept relates to a mobile electronic device component comprising the polymer blend of any of the first through twenty-sixth inventive concepts. A twenty-eighth inventive concept relates to a mobile electronic device comprising the mobile electronic device component of the twenty-seventh inventive concept. A twenty-ninth inventive concept relates to the mobile electronic device of the twenty-eighth inventive concept wherein the mobile electronic device is selected from the group consisting of a mobile phone, a personal digital assistant, a laptop computer, a tablet computer, a wearable computing device, including but not limited to, a smart watch and smart glasses, a camera, a portable audio player, a portable radio, a global position system receiver and a and portable game console. A thirtieth inventive concept is related to the mobile electronic device component of any of the twenty-ninth or thirtieth inventive concept, where the at least a portion of the polymer blend is exposed to the environment external to the mobile electronic device.

A thirty-first inventive concept relates to the polymer blend of any of the first through thirtieth inventive concepts, wherein the critical strain to failure of a 5 in. X 0.5 in. X 0.125 in. flexural bar molded form the polymer blend has a critical strain to failure of greater than about 2%, wherein the critical strain to failure is measured after aging; and wherein the aging comprises: coating the flexural bar with sunscreen lotion; resting the coated flexural bar at 65° C and a relative humidity of about 90% for about 24 hours and at an applied strain of 2.0%. A thirty-second inventive concept relates to the polymer blend of the thirty-first inventive concept wherein the sunscreen includes at least A representative sunscreen can include at least about 1.8 wt.% avobenzone, at least about 7 wt.% homosalate, and at least about 5 wt.% octocrylene.

## Claims

1. A polymer blend comprising:
an aromatic polyester polymer;
a polyphenylsulfone ("PPSU") polymer; and
a reactive impact modifier comprising an elastomer.

2. The polymer blend of claim 1, wherein the aromatic polyester polymer comprises recurring units ("Rₚₑ") represented by following formula(I): 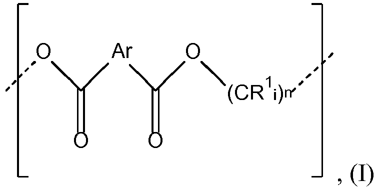 wherein
- Ar comprises an arylene group comprising at least 2 fused benzenic rings including at least two carbons in common;
- R¹, at each instance, is independently selected from the group consisting of a halogen, an alky, an alkenyl, an aryl, a aryl, an ether, a thioether, an ester, an amide, an imide, an alkali or alkaline earth metal sulfonate, an alkyl sulfonate, an alkali or alkaline earth metal phosphonate, an alkyl phosphonate, an amine, an quaternary ammonium, and any combination thereof;
- n is an integer ranging from 1 to 20 and
- i, at each instance, is an independently selected integer ranging from 0 to 2, wherein when i=0 at each instance, -(CR¹ᵢ)ₙ- in Formula (I) can be represented by the formula -CₙH₂ₙ-.

3. The polymer blend of claim 1 or 2, wherein Ar comprises a napthalate represented by the following formula (V), 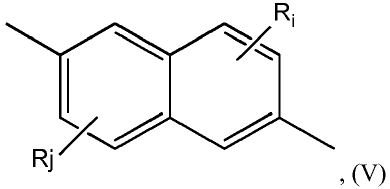 wherein
- R², at each instance, is independently selected from the group consisting of a halogen, an alkyl, a perhalogenated alkyl, an alkenyl, a perhalogenated alkynyl, an aryl, a perhalogenated aryl, an ether, a thioether, an ester, an amide, an imide, an alkali or alkaline earth metal sulfonate, an alkyl sulfonate, an alkali or alkaline earth metal phosphonate, an alkyl phosphonate, an amine, an quaternary ammonium, and any combination thereof and
- j, at each instance, is an independently selected integer from 0 to 3.

4. The polymer blend of any of claims 1 to 3, wherein the concentration of the aromatic polyester polymer is from about 1 wt.% to about 80 wt.%, relative to the total weight of the polymer blend.

5. The polymer blend of any of claims 1 to 4, wherein the PPSU polymer comprises recurring unit (Rₚₚₛᵤ) represented by the following formula (VI): 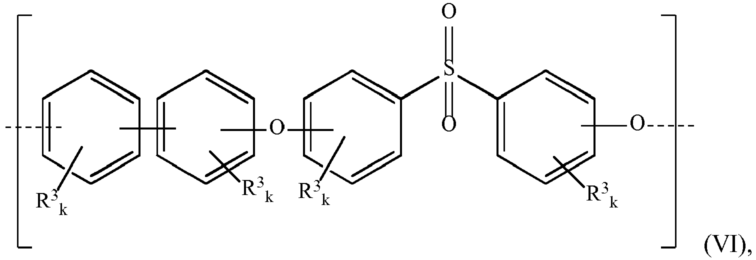 wherein
- R³, at each instance, is independently selected from the group consisting of a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, a quaternary ammonium, and any combination thereof and
- where k, at each instance, is an independently selected integer from 0 to 4.

6. The polymer blend of any of claims 1 to 5, wherein the PPSU polymer comprises recurring units (R'ₚₚₛᵤ) represented by the following formula (VII):

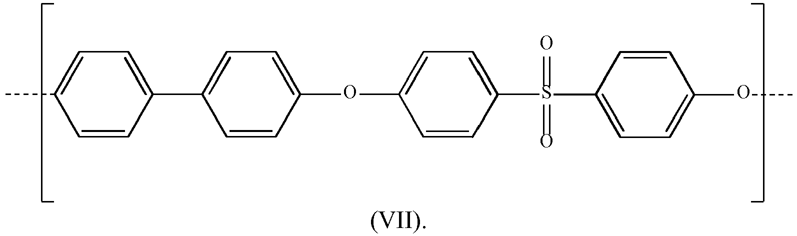

7. The polymer blend of any of claims 1 to 6, wherein the concentration of the PPSU polymer is from about 35 wt.% to about 95 wt.% , relative to the total weight of the polymer blend.

8. The polymer blend of any of claims 1 to 7, wherein the PPSU polymer comprises a melt flow rate that is no more than about 25g/10 min., as measured according the ASTM D1238 standard at a temperature of 365° C and a weight of 5 kg.

9. The polymer blend of any of claims 1 to 8, wherein the impact modifier comprises a functionalized polyolefin comprising a polymer including ethylene and glycidyl methacrylate.

10. The polymer blend of any of claims 1 to 9, wherein the impact modifier is free of acrylic ester moieties.

11. The polymer blend of any of claims 1 to 10, wherein the impact modifier concentration is at least about 8 wt%, relative to the total weight of the polymer blend.

12. The polymer blend of any of claims 1 to 11, further comprising a polycarbonate polymer comprising recurring unit (R_{pc}) represented by the following formula (IX): 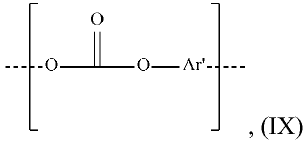 wherein Ar' is represented by the following formula (XII) 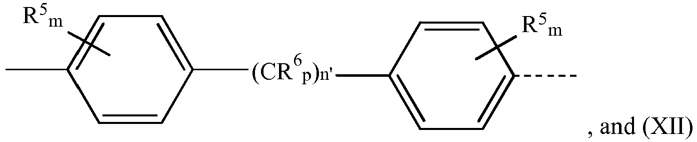 wherein
- R⁶, at each instance, is independently selected from the group consisting of a halogen, an alkyl, a perhalogenated alkyl, an alkenyl, a perhalogenated alkynyl, an aryl, a perhalogenated aryl, an ether, a thioether, an ester, an amide, an imide, an alkali or alkaline earth metal sulfonate, an alkyl sulfonate, an alkali or alkaline earth metal phosphonate, an alkyl phosphonate, an amine, an quaternary ammonium, and any combination thereof;
- m, at each instance, is an independently selected integer ranging from 0 to 4;
- n' is an integer ranging from 1 to 20; and
- p, at each instance, is an independently selected integer ranging from 0 to 2.

13. The polymer blend of any of claims 1 to 12, wherein the blend comprises a notched Izod impact resistance of at least about 300 J/m, as measured according to the ASTM D256 standard.

14. A mobile electronic device component comprising the polymer blend of any of claims 1 to 13.

15. The mobile electronic device of claim 14, wherein the mobile electronic device is selected from the group consisting of a mobile phone, a personal digital assistant, a laptop computer, a tablet computer, a wearable computing device, a camera, a portable audio player, a portable radio, a global position system receiver and a and portable game console.

## Patentansprüche

1. Polymerblend, umfassend :
ein aromatisches Polyester-Polymer;
ein Polyphenylsulfon("PPSU")-Polymer; und
einen reaktiven Schlagzähigkeitsmodifikator, der ein Elastomer umfasst.

2. Polymerblend nach Anspruch 1, wobei das aromatische Polyester-Polymer Wiederholungseinheiten ("Rₚₑ") der folgenden Formel (I) umfasst: 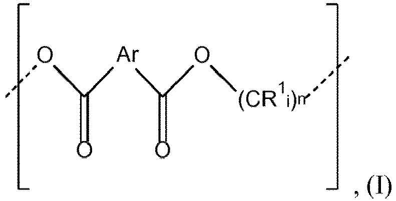 wobei
- Ar eine Arylengruppe mit mindestens 2 anellierten Benzolringen mit mindestens zwei gemeinsamen Kohlenstoffatomen umfasst;
- R¹ jeweils unabhängig aus der Gruppe bestehend aus einem Halogen, einem Alkyl, einem Alkenyl, einem Aryl, einem Aryl, einem Ether, einem Thioether, einem Ester, einem Amid, einem Imid, einem Alkali- oder Erdalkalimetallsulfonat, einem Alkylsulfonat, einem Alkali- oder Erdalkalimetallphosphonat, einem Alkylphosphonat, einem Amin, einem quaternären Ammonium und einer beliebigen Kombination davon ausgewählt ist;
- n für eine ganze Zahl im Bereich von 1 bis 20 steht und
- i jeweils für eine unabhängig ausgewählte ganze Zahl im Bereich von 0 bis 2 steht, wobei im Fall von i = 0 -(CR¹ᵢ)ₙ- in Formel (I) durch die Formel -CₙH₂ₙ- wiedergegeben werden kann.

3. Polymerblend nach Anspruch 1 oder 2, wobei Ar ein Naphthalat der folgenden Formel (V) umfasst, 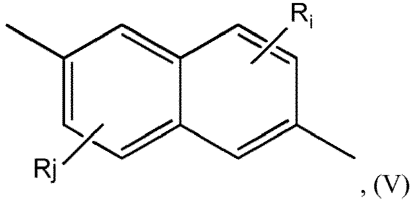 wobei
- R² jeweils unabhängig aus der Gruppe bestehend aus einem Halogen, einem Alkyl, einem perhalogenierten Alkyl, einem Alkenyl, einem perhalogenierten Alkinyl, einem Aryl, einem perhalogenierten Aryl, einem Ether, einem Thioether, einem Ester, einem Amid, einem Imid, einem Alkali- oder Erdalkalimetallsulfonat, einem Alkylsulfonat, einem Alkali- oder Erdalkalimetallphosphonat, einem Alkylphosphonat, einem Amin, einem quaternären Ammonium und einer beliebigen Kombination davon ausgewählt ist und
- j jeweils für eine unabhängig ausgewählte ganze Zahl von 1 bis 3 steht.

4. Polymerblend nach einem der Ansprüche 1 bis 3, wobei die Konzentration des aromatischen Polyester-Polymers etwa 1 Gew.-% bis etwa 80 Gew.-%, bezogen auf das Gesamtgewicht des Polymerblends, beträgt.

5. Polymerblend nach einem der Ansprüche 1 bis 4, wobei das PPSU-Polymer Wiederholungseinheiten (Rₚₚₛᵤ) der folgenden Formel (VI) umfasst : 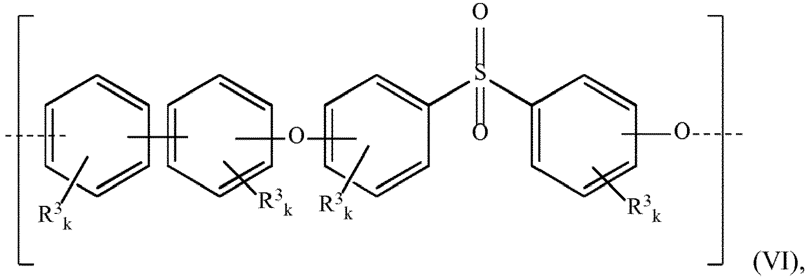 wobei
- R³ jeweils unabhängig aus der Gruppe bestehend aus einem Halogen, einem Alkyl, einem Alkenyl, einem Alkinyl, einem Aryl, einem Ether, einem Thioether, einer Carbonsäure, einem Ester, einem Amid, einem Imid, einem Alkali- oder Erdalkalimetallsulfonat, einem Alkylsulfonat, einem Alkali- oder Erdalkalimetallphosphonat, einem Alkylphosphonat, einem Amin, einem quaternären Ammonium und einer beliebigen Kombination davon ausgewählt ist und
- wobei k jeweils für eine unabhängig ausgewählte ganze Zahl von 0 bis 4 steht.

6. Polymerblend nach einem der Ansprüche 1 bis 5, wobei das PPSU-Polymer Wiederholungseinheiten (R'ₚₚₛᵤ) der folgenden Formel (VII) umfasst :

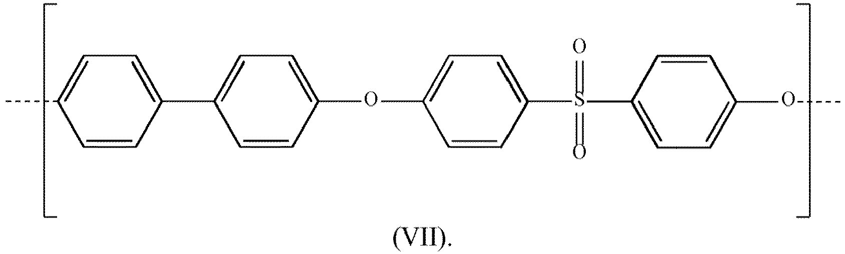

7. Polymerblend nach einem der Ansprüche 1 bis 6, wobei die Konzentration des PPSU-Polymers etwa 35 Gew.-% bis etwa 95 Gew.-%, bezogen auf das Gesamtgewicht des Polymerblends, beträgt.

8. Polymerblend nach einem der Ansprüche 1 bis 7, wobei das PPSU-Polymer eine Schmelzflussrate umfasst, die nicht mehr als etwa 25 g/10 min gemäß Messung nach ASTM-Norm D1238 bei der Temperatur von 365 °C und einem Gewicht von 5 kg beträgt.

9. Polymerblend nach einem der Ansprüche 1 bis 8, wobei der Schlagzähigkeitsmodifikator ein funktionalisiertes Polyolefin umfasst, das ein Polymer, das Ethylen und Glycidyl methacrylat enthält, umfasst.

10. Polymerblend nach einem der Ansprüche 1 bis 9, wobei der Schlagzähigkeitsmodifikator frei von Acrylsäureester-Gruppierungen ist.

11. Polymerblend nach einem der Ansprüche 1 bis 10, wobei die Schlagzähigkeitsmodifikatorkonzentration mindestens etwa 8 Gew.-%, bezogen auf das Gesamtgewicht des Polymerblends, beträgt.

12. Polymerblend nach einem der Ansprüche 1 bis 11, ferner umfassend ein Polycarbonat-Polymer, das Wiederholungseinheiten (R_{pc}) der folgenden Formel (IX) umfasst : 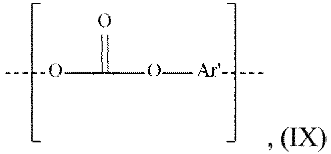 wobei Ar' durch die folgende Formel (XII) wiedergegeben wird : 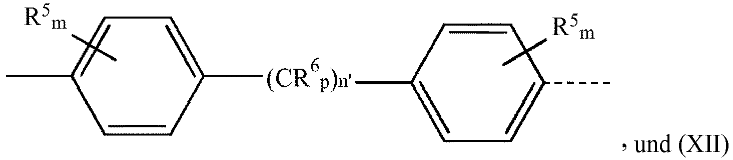 wobei
- R⁶ jeweils unabhängig aus der Gruppe bestehend aus einem Halogen, einem Alkyl, einem perhalogenierten Alkyl, einem Alkenyl, einem perhalogenierten Alkinyl, einem Aryl, einem perhalogenierten Aryl, einem Ether, einem Thioether, einem Ester, einem Amid, einem Imid, einem Alkali- oder Erdalkalimetallsulfonat, einem Alkylsulfonat, einem Alkali- oder Erdalkalimetallphosphonat, einem Alkylphosphonat, einem Amin, einem quaternären Ammonium und einer beliebigen Kombination davon ausgewählt ist;
- m jeweils für eine unabhängig ausgewählte ganze Zahl von 0 bis 4 steht;
- n' für eine ganze Zahl im Bereich von 1 bis 20 steht; und
- p jeweils für eine unabhängig ausgewählte ganze Zahl im Bereich von 0 bis 2 steht.

13. Polymerblend nach einem der Ansprüche 1 bis 12, wobei das Blend eine IZOD-Kerbschlagzähigkeit von mindestens etwa 300 J gemäß Messung nach der ASTM-Norm D256 umfasst.

14. Bauteil für eine mobile elektronische Vorrichtung, umfassend das Polymerblend nach einem der Ansprüche 1 bis 13.

15. Mobile elektronische Vorrichtung nach Anspruch 14, wobei die mobile elektronische Vorrichtung aus der Gruppe bestehend aus einem Mobiltelefon, einem persönlichen digitalen Assistenten, einem Laptop-Computer, einem Tablet-Computer, einer tragbaren Computervorrichtung, einer Kamera, einem tragbaren Audio-Spieler, einem tragbaren Radio, einem Satellitennavigationssystemempfänger und einer tragbaren Spielkonsole ausgewählt ist.

## Revendications

1. Mélange de polymères comprenant :
un polymère de polyester aromatique ;
un polymère de polyphénylsulfone (« PPSU ») ; et
un modificateur de résistance aux chocs réactif comprenant un élastomère.

2. Mélange de polymères selon la revendication 1, dans lequel le polymère de polyester aromatique comprend des motifs récurrents (« Rₚₑ ») représentés par la formule (I) suivante : 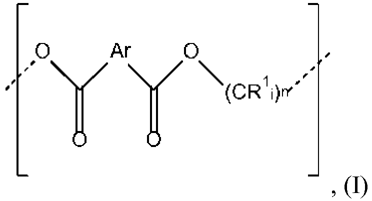 dans laquelle
- Ar comprend un groupe arylène comprenant au moins 2 cycles benzéniques condensés comprenant au moins deux carbones en commun ;
- R¹, à chaque occurrence, est indépendamment choisi dans le groupe constitué d'un halogène, d'un alkyle, d'un alcényle, d'un aryle, d'un aryle, d'un éther, d'un thioéther, d'un ester, d'un amide, d'un imide, d'un sulfonate de métal alcalin ou alcalino-terreux, d'un sulfonate d'alkyle, d'un phosphonate de métal alcalin ou alcalino-terreux, d'un phosphonate d'alkyle, d'une amine, d'un ammonium quaternaire, et une combinaison quelconque de ceux-ci ;
- n est un entier dans la plage de 1 à 20 et
- i, à chaque occurrence, est un entier indépendamment choisi dans la plage de 0 à 2, dans lequel, lorsque i = 0 à chaque occurrence, -(CR¹ᵢ)ₙ- dans la formule (I) peut être représenté par la formule -CₙH₂ₙ-.

3. Mélange de polymères selon la revendication 1 ou 2, dans lequel Ar comprend un naphtalate représenté par la formule (V) suivante, 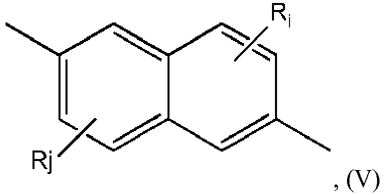 dans laquelle
- R², à chaque occurrence, est indépendamment choisi dans le groupe constitué d'un halogène, d'un alkyle, d'un alkyle perhalogéné, d'un alcényle, d'un alcynyle perhalogéné, d'un aryle, d'un aryle perhalogéné, d'un éther, d'un thioéther, d'un ester, d'un amide, d'un imide, d'un sulfonate de métal alcalin ou alcalino-terreux, d'un sulfonate d'alkyle, d'un phosphonate de métal alcalin ou alcalino-terreux, d'un phosphonate d'alkyle, d'une amine, d'un ammonium quaternaire, et une combinaison quelconque de ceux-ci et
- j, à chaque occurrence, est un entier indépendamment choisi de 0 à 3.

4. Mélange de polymères selon l'une quelconque des revendications 1 à 3, dans lequel la concentration du polymère de polyester aromatique est d'environ 1 % en poids à environ 80 % en poids, par rapport au poids total du mélange de polymères.

5. Mélange de polymères selon l'une quelconque des revendications 1 à 4, dans lequel le polymère PPSU comprend un motif récurrent (R_{PPSU}) représenté par la formule (VI) suivante : 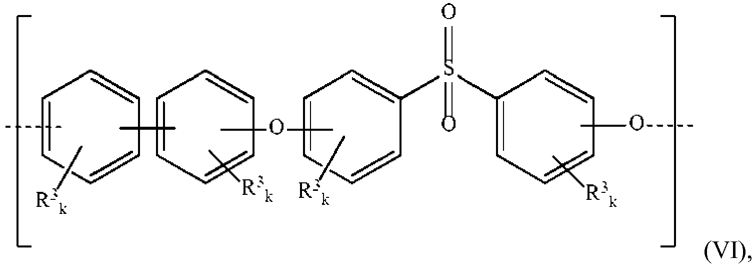 dans laquelle
- R³, à chaque occurrence, est indépendamment choisi dans le groupe constitué d'un halogène, d'un alkyle, d'un alcényle, d'un alcynyle, d'un aryle, d'un éther, d'un thioéther, d'un acide carboxylique, d'un ester, d'un amide, d'un imide, d'un sulfonate de métal alcalin ou alcalino-terreux, d'un sulfonate d'alkyle, d'un phosphonate de métal alcalin ou alcalino-terreux, d'un phosphonate d'alkyle, d'une amine, d'un ammonium quaternaire, et une combinaison quelconque de ceux-ci et
- où k, à chaque occurrence, est un entier indépendamment choisi de 0 à 4.

6. Mélange de polymères selon l'une quelconque des revendications 1 à 5, dans lequel le polymère PPSU comprend des motifs récurrents (R'ₚₚₛᵤ) représentés par la formule (VII) suivante :

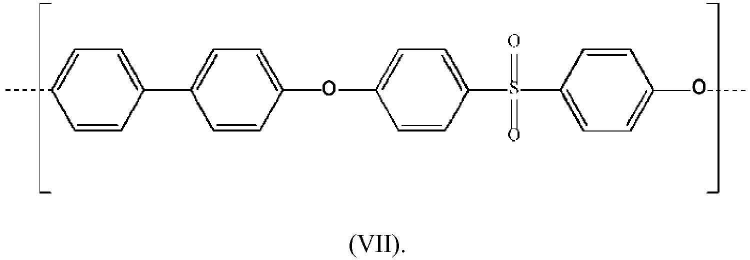

7. Mélange de polymères selon l'une quelconque des revendications 1 à 6, dans lequel la concentration du polymère PPSU est d'environ 35 % en poids à environ 95 % en poids, par rapport au poids total du mélange de polymères.

8. Mélange de polymères selon l'une quelconque des revendications 1 à 7, dans lequel le polymère PPSU présente un indice de fluidité qui n'est pas supérieur à environ 25 g/10 min, tel que mesuré selon la norme ASTM D1238 à une température de 365 °C et un poids de 5 kg.

9. Mélange de polymères selon l'une quelconque des revendications 1 à 8, dans lequel le modificateur de résistance aux chocs comprend une polyoléfine fonctionnalisée comprenant un polymère comprenant de l'éthylène et du méthacrylate de glycidyle.

10. Mélange de polymères selon l'une quelconque des revendications 1 à 9, dans lequel le modificateur de résistance aux chocs est exempt de fragments d'ester acrylique.

11. Mélange de polymères selon l'une quelconque des revendications 1 à 10, dans lequel la concentration de modificateur de résistance aux chocs est d'au moins environ 8 % en poids, par rapport au poids total du mélange de polymères.

12. Mélange de polymères selon l'une quelconque des revendications 1 à 11, comprenant en outre un polymère de polycarbonate comprenant un motif récurrent (R_{pc}) représenté par la formule (IX) suivante : 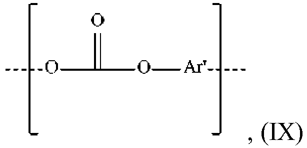 dans laquelle Ar' est représenté par la formule (XII) suivante 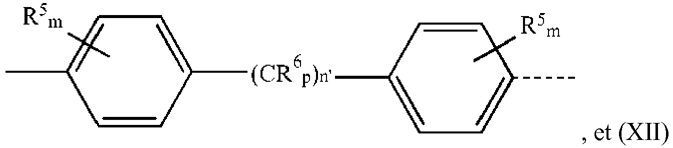 dans laquelle
- R⁶, à chaque occurrence, est indépendamment choisi dans le groupe constitué d'un halogène, d'un alkyle, d'un alkyle perhalogéné, d'un alcényle, d'un alcynyle perhalogéné, d'un aryle, d'un aryle perhalogéné, d'un éther, d'un thioéther, d'un ester, d'un amide, d'un imide, d'un sulfonate de métal alcalin ou alcalino-terreux, d'un sulfonate d'alkyle, d'un phosphonate de métal alcalin ou alcalino-terreux, d'un phosphonate d'alkyle, d'une amine, d'un ammonium quaternaire, et une combinaison quelconque de ceux-ci ;
- m, à chaque occurrence, est un entier indépendamment choisi dans la plage de 0 à 4 ;
- n' est un entier dans la plage de 1 à 20 ; et
- p, à chaque occurrence, est un entier indépendamment choisi dans la plage de 0 à 2.

13. Mélange de polymères selon l'une quelconque des revendications 1 à 12, le mélange comprenant une résistance aux chocs Izod sur barreau entaillé d'au moins environ 300 J/m, telle que mesurée selon la norme ASTM D256.

14. Composant de dispositif électronique mobile comprenant le mélange de polymères selon l'une quelconque des revendications 1 à 13.

15. Dispositif électronique mobile selon la revendication 14, le dispositif électronique mobile étant choisi dans le groupe constitué d'un téléphone portable, d'un assistant numérique personnel, d'un ordinateur portable, d'une tablette informatique, d'un dispositif informatique mettable, d'une caméra, d'un lecteur audio portable, d'une radio portable, d'un récepteur de système de positionnement global et d'une console de jeu portable.
